# EUROPÄISCHE PATENTSCHRIFT

(11) **EP 2 431 201 B1**
(45) Veröffentlichungstag und Bekanntmachung des Hinweises auf die Patenterteilung: **12.03.2014**
(21) Anmeldenummer: 11151962.5
(22) Anmeldetag: 25.01.2011
(51) Int. Cl.: B60D 1/64, B61G 5/10

(54) **Kupplungskopf einer Kupplungsvorrichtung zum mechanischen Verbinden von zwei Einheiten, insbesondere Fahrzeugeinheiten**
Coupling head of a coupling device for mechanically connecting two units, in particular vehicle units
Tête d'embrayage d'un dispositif d'embrayage pour la liaison mécanique de deux unités, notamment des unités de véhicules

(30) Priorität: 20.09.2010 EP 10177684
(43) Veröffentlichungstag der Anmeldung: 21.03.2012
(73) Patentinhaber: Voith Patent GmbH, 89522 Heidenheim (DE)
(72) Erfinder: Kobert, Siegfried, 31188 Holle (DE); Meyer, Martin Wolfgang, 75177 Pforzheim (DE); Kahl, Sanja, 73269 Hochdorf (DE)
(74) Vertreter: Rupprecht, Kay

(56) Entgegenhaltungen:
- EP-A1- 0 747 244
- WO-A1-01/60645
- WO-A1-03/035415

## Beschreibung

Die Erfindung betrifft einen Kupplungskopf gemäß dem Oberbegriff des unabhängigen Patentanspruches 1.

Demgemäß betrifft die Erfindung einen Kupplungskopf, welcher mindestens einen Kuppelverschluss zum Herstellen einer mechanischen Verbindung mit einem Kuppelverschluss eines Gegenkupplungskopfes sowie eine Elektrokontaktkupplung zum Kuppeln von mindestens einer elektrischen Leitung zwischen dem Kupplungskopf und dem Gegenkupplungskopf aufweist. Ein derartiger Kupplungskopf eignet sich insbesondere zum Ausbilden einer mechanischen Verbindung zwischen zwei Einheiten, insbesondere Fahrzeugeinheiten, wie etwa zwei benachbarte Wagenkästen eines mehrteiligen Fahrzeugverbundes oder zum Ausbilden einer mechanischen Verbindung zwischen einem Pick-Up-Aufbau und der Ladefläche eines Kraftfahrzeuges. Denkbar wäre es ferner, den erfindungsgemäßen Kupplungskopf zum Ankuppeln beispielsweise eines Schneepfluges oder eines anderen auswechselbaren Anbaus eines Kraftfahrzeuges zu verwenden.

Die Verwendung eines derartigen Kupplungskopfes bei einer Kupplungsvorrichtung ist allgemein aus dem Stand der Technik bekannt. Insbesondere werden Kupplungsköpfe der eingangs genannten Art in unterschiedlichen Ausbildungsformen zum Kuppeln von Straßenfahrzeugen eingesetzt. Als Beispiel hierfür seien Anhängerkupplungen für Personenkraftfahrzeuge genannt, welche üblicherweise als Kugelkopfkupplungen ausgeführt sind, bei denen eine an einem Anhänger befestigte Kappe über ein kugelförmiges, nach oben stehendes Kugelkopfelement gebracht und dort arretiert wird. Bei Sattelschlepperlastzügen werden zur Kupplung von Zugmaschine und Auflieger in der Regel Sattelkupplungen verwendet, bei denen ein nach unten stehender Zapfen des Aufliegers in einer Aufnahme der Zugmaschine arretiert wird. Zwischen Lastkraftwagen und deren Anhänger sind häufig Bolzenkupplungen eingesetzt, bei denen eine meist an einer Deichsel des Anhängers befindliche Öse in eine am Lastkraftwagen befindliche Aufnahme gebracht und dort mit Hilfe eines Bolzens fixiert wird.

Derartige aus dem Stand der Technik bekannte Systeme dienen in erster Linie zur rein mechanischen Verbindung zwischen den Fahrzeugen, wobei beispielsweise pneumatische, elektrische oder hydraulische Verbindungen für Beleuchtung, Bremsen etc. bei einem Ankuppelvorgang häufig durch manuelles Zusammenstecken von Kabeln oder Schläuchen gebildet werden. Durch das manuelle Kuppeln insbesondere der elektrischen Leitungen besteht jedoch die Gefahr eines fehlerhaften Zusammensteckens der entsprechenden Kontaktterminals, so dass eine Gefahrenquelle für das Fahrzeug und den Straßenverkehr entstehen kann.

Da ferner die aus dem Stand der Technik bekannten mechanischen Kupplungsvorrichtungen in der Regel kein starres oder starr gemachtes System darstellen, besteht auch die Gefahr, dass zwischen dem Kupplungskopf und dem Gegenkupplungskopf der Kupplungsvorrichtung eine Relativbewegung möglich ist, so dass ein automatisches Kuppeln insbesondere von elektrischen Leitungen nicht einwandfrei realisierbar ist. Insbesondere besteht die Gefahr, dass bei den herkömmlichen Kupplungsköpfen beim Kuppelvorgang Längs- und Querbewegungen auftreten, die entsprechend kompensiert werden müssten, um auch ein einwandfreies Kuppeln der elektrischen Leitungen und vor allem ohne ein Auftreten von materialbelastenden Lichtbögen an den elektrischen Kontaktterminals der jeweiligen Elektrokontaktkupplungen zu ermöglichen.

Zwar sind aus der Schienenfahrzeugtechnik vollautomatische Kupplungssysteme bekannt, bei denen vollautomatisch nicht nur eine mechanische Verbindung zwischen zwei benachbarten Wagenkästen herstellbar ist, sondern auch Elektrokontaktkupplungen vollautomatisch gekuppelt werden können, derartige aus der Schienenfahrzeugtechnik bekannte Lösungen erfordern allerdings entsprechend große Einbauräume für das Anbringen der in der Regel von der mechanischen Kupplung getrennt ausgeführten Elektrokontaktkupplung, wobei die notwendigen Freiräume in der Praxis häufig nicht zur Verfügung stehen.

Andererseits ist aus der Druckschrift DE 24 14 384 A1 beispielsweise bekannt, dass für das mechanische Kuppeln benachbarter Wagenkästen eines mehrgliedrigen Schienenfahrzeuges der Kupplungskopf derart auszuführen ist, dass der Kupplungskopf am vorderen, stirnseitigen Ende in der Kuppelebene eine plane, quer zur Längsachse angeordnete Stirnfläche aufweist, die mit der entsprechenden Stoßfläche des Gegenkupplungskopfes beim Kuppelvorgang zur Anlage kommt. Dabei ist ferner an oder in der Stoßfläche ein Druckluftterminal zum Kuppeln einer Druckluftleitung vorgesehen.

Jedoch lässt sich das Prinzip dieser aus dem Stand der Technik bekannten Anordnung, bei welcher starre und spielfreie Stirnflächen der jeweiligen Wagenkästen aufeinanderstoßen, nicht ohne weiteres bei Kupplungsvorrichtungen zum Kuppeln von zwei Einheiten realisieren, da häufig keine quer zur Längsachse ausgerichtete Stirnfläche bzw. Stoßfläche vorgesehen ist. Darüber hinaus weist beim Kupplungsvorgang jeder Kupplungskopf dieser Bauart grundsätzlich noch ein gewisses Spiel auf, so dass zwischen den jeweiligen Kupplungsköpfen Längs- und Querbewegungen nicht zu vermeiden sind, die entsprechend kompensiert werden müssen, um auch ein einwandfreies Kuppeln der Elektrokontaktkupplungen zu ermöglichen.

Abhängig von der Ausführung der mechanischen Kupplung gibt es ferner eine ganze Reihe von verschieden konfigurierten Kabelkupplungen. In der Druckschrift DE 499 955 A beispielsweise wird vorgeschlagen, die Elektrokontaktkupplung fest mit der mechanischen Kupplung zu verbinden. Aus der Druckschrift DE 927 445 A ist es bekannt, die Elektrokontaktkupplung bezüglich der mechanischen Kupplung verschwenkbar auszuführen. Schließlich wird noch in der Druckschrift DE 24 14 384 A1 eine Elektrokontaktkupplung vorgeschlagen, die parallel zur mechanischen Kupplungsachse verschiebbar ist.

Die Kupplungsköpfe dieser aus dem Stand der Technik bekannten Kupplungen weisen am vorderen Ende eine plane, quer zur Längsachse angeordnete Stoß- bzw. Stirnfläche auf, die mit der entsprechenden Stoßfläche der Gegenkupplung zur Anwendung kommen. Datensignale und Leistungskabel werden hierbei über projektspezifisch konstruierte Elektrokontaktkupplungen, die in der Schienenfahrzeugtechnik auch als "E-Kästen" bezeichnet werden, übertragen. Diese Elektrokontaktkupplungen werden dabei unterhalb bzw. seitlich der mechanischen Kupplungen angeordnet.

Ein weiterer gattungsgemäßer Kupplungskopf ist aus der Druckschrift WO 01/60645 A1 bekannt.

Die projektorientierte Ausführung dieser Elektrokontaktkupplungen stellen in der Regel individuelle Lösungen zur Ausbildung und Anordnung einer Elektrokontaktkupplung dar. Die bekannten Lösungen eignen sich insbesondere nicht für einen universell einsetzbaren Kupplungskopf, welcher nicht nur in der Schienenfahrzeugtechnik, sondern auch in der Kraftfahrzeugtechnik einsetzbar ist, um vollautomatisch ein mechanisches Kuppeln sowie ein Kuppeln von elektrischen Leitungen zwischen zwei relativ zueinander beweglichen Einheiten zu ermöglichen.

Auf Grundlage dieser Problemstellung liegt der vorliegenden Erfindung die Aufgabe zugrunde, einen Kupplungskopf der eingangs genannten Art dahingehend weiterzubilden, dass in einer vollautomatisierten oder zumindest teilautomatisierten Art und Weise ein Kuppelvorgang unter Einbeziehung von elektrischen, optischen, pneumatischen und/oder hydraulischen Verbindungsleitungen erfolgen kann, wobei der Kupplungskopf universell und für eine breite Palette von verschiedenen Anforderungen einsetzbar ist.

Diese Aufgabe wird erfindungsgemäß durch den Gegenstand des unabhängigen Patentanspruches 1 gelöst.

Die mit der erfindungsgemäßen Lösung erzielbaren Vorteile liegen auf der Hand: durch das Vorsehen eines Kupplungskopfgehäuses, in welchem der mindestens eine Kuppelverschluss sowie die Elektrokontaktkupplung aufgenommen sind, ist sichergestellt, dass sämtliche verschließanfälligen Bauteile des Kupplungskopfes in dem Kupplungskopfgehäuse gekapselt vorliegen, so dass der Wartungsaufwand des Kupplungskopfes im Vergleich zu aus dem Stand der Technik bekannten Kupplungsköpfen deutlich reduziert werden kann. Da zusätzlich der Grundkörper des Kupplungskopfes mit einer Anlenkung versehen ist, über welche der Kupplungskopf relativ zu einem Kupplungsschaft in horizontaler und/oder vertikaler Ebene verschwenkbar ist, ist sichergestellt, dass der Kupplungskopf zusammen mit einem Gegenkupplungskopf eine starre mechanische Verbindung ausbilden kann, wobei ggf. auftretende Längs-und/oder Querbewegungen über die Anlenkung kompensiert werden. Dies ermöglicht ein einwandfreies Kuppeln der Elektrokontakte, wobei insbesondere auch ein Auftreten von materialbelastenden Lichtbögen an den Elektrokontaktterminals wirksam verhindert werden kann. Durch das Vorsehen der Anlenkung am Grundkörper des Kupplungskopfes eignet sich somit der erfindungsgemäße Kupplungskopf für einen mechanischen Kupplungsvorgang, bei welchem auch die elektrische Verbindungsleitungen vollautomatisiert oder zumindest teilautomatisiert mitgekuppelt werden können. Zusätzlich ist vorgesehen, dass die Anlenkung an dem Grundkörper des Kupplungskopfes angebracht ist, wobei der Grundkörper selber von dem Kupplungskopfgehäuse vor Witterungseinflüssen wie etwa Verschmutzung, Eis etc., geschützt ist.

Ferner liefert die Erfindung Vorteile im Hinblick auf die Sicherheit, da es für den Kuppelvorgang nicht erforderlich ist, dass ein Bediener per Hand eingreifen und zwischen die zu kuppelnden Objekte treten muss.

Durch den insgesamt kompakten Aufbau des Kupplungskopfes eignet sich dieser für eine Vielzahl von unterschiedlichen Anwendungen. Insbesondere eignet sich die erfindungsgemäße Lösung zum mechanischen Verbinden von zwei benachbarten Wagenkästen eines mehrteiligen Fahrzeugverbundes, wie beispielsweise zum Verbinden von einem Kraftfahrzeug mit einem entsprechenden Anhänger oder zum Verbinden von zwei Wagenkästen eines mehrgliedrigen spurgeführten Fahrzeuges. Selbstverständlich ist es aber auch denkbar, den Kupplungskopf in anderen Anwendungen einzusetzen, wenn nicht nur eine mechanische Verbindung von zwei Einheiten, sondern auch das gleichzeitige Kuppeln elektrischer Leitungen von Interesse ist. Dies ist beispielsweise beim Verbinden eines Pick-Up-Aufbaus mit der Ladefläche eines Kraftfahrzeuges der Fall. Denkbar wäre es ferner, den erfindungsgemäßen Kupplungskopf zum Ankuppeln beispielsweise eines Schneepfluges oder eines anderen auswechselbaren Anbaus an die Stirnseite eines Kraftfahrzeuges zu verwenden.

In einer bevorzugten Ausführungsform ist vorgesehen, dass der Grundkörper an seiner der Kupplungsebene abgewandten Seite einen vertikal verlaufenden Bereich mit einer zentral angeordneten Öffnung aufweist, wobei der Kupplungsschaft durch diese Öffnung läuft, so dass durch die Öffnung der Schwenkbereich des Kupplungskopfes relativ zum Kupplungsschaft festgelegt ist. Hierbei handelt es sich um eine besonders leicht zu realisierende Lösung, um den Schwenkbereich des Kupplungskopfes relativ zum Kupplungsschaft festzulegen. Beispielsweise ist es denkbar, dass der vertikal verlaufende Bereich des Grundkörpers als Platte ausgebildet ist, welche das Kupplungskopfgehäuse an seiner der Kupplungsebene abgewandten Seite abschließt, um eine Kapselung der in dem Kupplungskopfgehäuse aufgenommenen Komponenten, insbesondere des Kuppelverschlusses und der Elektrokontaktkupplung, zu ermöglichen. Selbstverständlich kommen aber auch andere Ausführungsformen für das Festlegen des Schwenkbereiches des Kupplungskopfes relativ zum Kupplungsschaft in Frage.

Im Hinblick auf die am Grundkörper des Kupplungskopfes vorgesehene Anlenkung ist es bevorzugt, wenn diese als Sphärolager ausgeführt ist, über welches der Kupplungsschaft in horizontaler sowie in vertikaler Ebene relativ zu dem Kupplungskopf verschwenkbar an den Grundkörper angelenkt ist. Die Verwendung eines Sphärolagers hat den zusätzlichen Vorteil, dass ferner eine Torsionsbewegung des Kupplungsschafts relativ zu dem Kupplungskopf zugelassen ist.

Alternativ zu einem Sphärolager ist es selbstverständlich aber auch denkbar, für die Anlenkung ein Drehgelenk zu verwenden, über welches der Kupplungsschaft entweder in horizontaler oder in vertikaler Ebene relativ zu dem Kupplungskopf an dem Grundkörper verschwenkbar angelenkt ist. Beispielsweise ist es denkbar, innerhalb des Kupplungskopfgehäuses ein erstes Drehgelenk vorzusehen, über welches die Verschwenkbarkeit des Kupplungskopfes relativ zu dem Kupplungsschaft in horizontaler Ebene ermöglicht wird, wobei zusätzlich zu dem ersten Drehgelenk in dem Kupplungskopfgehäuse ferner ein zweites Drehgelenk vorgesehen ist, über welches ein Verschwenken des Kupplungskopfes relativ zu dem Kupplungsschaft in vertikaler Ebene realisierbar ist. Durch das Vorsehen von zwei Drehgelenken zum Ausbilden der Anlenkung ist ein Verschwenken des Kupplungskopfes sowohl in horizontaler als auch in vertikaler Ebene relativ zu dem Kupplungsschaft realisierbar.

Andererseits ist es grundsätzlich aber auch denkbar, die Anlenkung als Drehgelenk auszuführen, über welches der Kupplungsschaft entweder in horizontaler oder in vertikaler Ebene relativ zu dem Kupplungskopf an dem Grundkörper verschwenkbar angelenkt ist, wobei der Kupplungsschaft zweiteilig ausgeführt ist und ein erstes Schaftteil sowie ein zweites Schaftteil aufweist, welche über ein zusätzliches Gelenk miteinander verbunden sind. Dieses zusätzliche Gelenk sollte dabei die Verschwenkbarkeit des Kupplungskopfes relativ zu dem Kupplungsschaft in vertikaler oder horizontaler Ebene ermöglichen.

Um zu erreichen, dass im ungekuppelten Zustand die Elektrokontaktkupplung vollständig gekapselt in dem Kupplungskopfgehäuse aufgenommen und insbesondere nicht Witterungseinflüssen ausgesetzt wird, ist in einer bevorzugten Weiterbildung der erfindungsgemäßen Lösung vorgesehen, dass die Elektrokontaktkupplung relativ zu dem Kupplungskopfgehäuse in Kupplungsrichtung des Kupplungskopfes verschiebbar ist, um die Elektrokontaktkupplung beim Kuppelvorgang in ihre Kuppelstellung zu überführen, in welcher mindestens ein Kontaktstift der Elektrokontaktkupplung zumindest bereichsweise außerhalb des Kupplungskopfgehäuses freiliegt. Der mindestens eine Kontaktstift der Elektrokontaktkupplung sollte dabei im zurückgezogenen Zustand der Elektrokontaktkupplung, d.h. in ihrer Normalstellung, vollständig innerhalb des Kupplungskopfgehäuses vorliegen, um den mindestens einen Kontaktstift vor Witterungseinflüssen schützen und einen unbeabsichtigten Kontakt mit beispielsweise Personen wirksam verhindern zu können. In der Kuppelstellung der Elektrokontaktkupplung sollte dabei vorzugsweise der mindestens eine Kontaktstift der Elektrokontaktkupplung soweit außerhalb des Kupplungskopfgehäuses freiliegen, dass der mindestens eine Kontaktstift in einer komplementär zum Kontaktstift ausgebildeten Buchse einer Elektrokontaktkupplung eines Gegenkupplungskopfes aufnehmbar ist, um ein sicheres Kuppeln der Elektrokontaktkupplung des Kupplungskopfes mit der Elektrokontaktkupplung des Gegenkupplungskopfes zu ermöglichen.

Unter dem hierin verwendeten Begriff "Kuppelstellung" ist die Stellung bzw. der Zustand zu verstehen, in welcher bzw. in welchem sich der Kupplungskopf oder die Elektrokontaktkupplung befindet, wenn der Kupplungskopf bzw. die Elektrokontaktkupplung mit einem komplementär ausgeführten Gegenkupplungskopf bzw. mit einer komplementär ausgebildeten Gegen-Elektrokontaktkupplung gekuppelt ist. In gleicher Weise wird unter dem hierin verwendeten Begriff "Normalstellung" die Stellung bzw. der Zustand zu verstehen, in welcher bzw. in welchem sich der Kupplungskopf oder die Elektrokontaktkupplung befindet, wenn der Kupplungskopf bzw. die Elektrokontaktkupplung nicht mit einem Gegenkupplungskopf bzw. einer Gegen-Elektrokontaktkupplung gekuppelt ist.

In einer bevorzugten Realisierung der zuletzt genannten Ausführungsform, bei welcher die Elektrokontaktkupplung relativ zu dem Kupplungskopfgehäuse in Kupplungsrichtung des Kupplungskopfes verschiebbar ist, ist vorgesehen, dass das Kupplungskopfgehäuse relativ zu dem Grundkörper entgegen der Kupplungsrichtung verschiebbar ist, um auf diese Weise die an dem Grundkörper angebrachte Elektrokontaktkupplung in ihre Kuppelstellung automatisch zu überführen, wenn auf das Kupplungskopfgehäuse eine vorab festgelegte oder festlegbare Mindestkraft entgegen der Kupplungsrichtung einwirkt.

Hierbei ist es beispielsweise denkbar, vorzugsweise innerhalb des Kupplungskopfgehäuses eine Vorspanneinrichtung, beispielsweise in Gestalt einer Federeinrichtung, vorzusehen, um das Kupplungskopfgehäuse gegenüber dem Grundkörper in Kupplungsrichtung vorzuspannen. Selbstverständlich kann diese Vorspanneinrichtung auch außerhalb des Kupplungskopfgehäuses angeordnet sein. Grundsätzlich ist es von Vorteil, wenn die Vorspannkraft, mit welcher das Kupplungskopfgehäuse gegenüber dem Grundkörper in Kupplungsrichtung vorgespannt wird, durch eine geeignete Wahl der Federkennlinie der Federeinrichtung festgelegt wird. Dadurch ist es in einer besonders leicht zu realisierenden aber dennoch effektiven Weise möglich, die Mindestkraft festzulegen, ab welcher sich das Kupplungskopfgehäuse relativ zu dem Grundkörper entgegen der Kupplungsrichtung verschiebt, um die an dem Grundkörper angebrachte Elektrokontaktkupplung in ihre Kuppelstellung überführen.

In einer bevorzugten Ausführungsform weist der mindestens eine Kuppelverschluss des Kupplungskopfes eine Kuppelöse auf, welche ausgelegt ist, mit einem Kuppelverschluss eines Gegenkupplungskopfes, und insbesondere mit einem Herzstück eines Kuppelverschlusses eines Gegenkupplungskopfes, eine lösbare mechanische Verbindung zu bilden. Derartige Kuppelverschlüsse sind aus dem Stand der Technik allgemein bekannt und insbesondere in der Schienenfahrzeugtechnik erprobt. Demnach kann zur Ausbildung einer mechanischen Verbindung zwischen dem Kupplungskopf und dem Gegenkupplungskopf auf bereits erprobte Bauteile zurückgegriffen werden, was die Realisierung des erfindungsgemäßen Kupplungskopfes vereinfacht und insbesondere kostengünstig gestaltet.

Für den Fall, dass - wie bereits angedeutet - bei dem Kupplungskopf das Kupplungskopfgehäuse relativ zu dem Grundkörper entgegen der Kupplungsrichtung verschiebbar ist, um die Elektrokontaktkupplung in ihre Kuppelstellung zu überführen, ist es bevorzugt, wenn in der der Kupplungsebene zugewandten Seite des Kupplungskopfgehäuses mindestens eine Öffnung vorgesehen ist, durch welche die Kuppelöse des mindestens einen Kuppelverschlusses läuft, wenn das Kupplungskopfgehäuse in seinem relativ zum Grundkörper entgegen der Kupplungsrichtung verschobenen Zustand vorliegt. Mit anderen Worten, durch die mindestens eine in der der Kupplungsebene zugewandten Seite des Kupplungskopfgehäuses vorgesehenen Öffnung läuft die Kuppelöse des mindestens einen Kupplungsverschlusses, wenn auf das Kupplungskopfgehäuse eine vorab festgelegte oder festlegbare Mindestkraft entgegen der Kupplungsrichtung einwirkt. Wirkt hingegen auf das Kupplungskopfgehäuse keine Kraft ein bzw. eine Kraft, welche geringer als die Mindestkraft ist, liegt bei dieser Ausführungsform der gesamte Kuppelverschluss innerhalb des Kupplungskopfgehäuses vor, so dass die Bauteile des Kuppelverschlusses vor Witterungseinflüssen etc. geschützt sind.

Die erfindungsgemäße Lösung ist nicht auf die Ausführungsform beschränkt, bei welcher das Kupplungskopfgehäuse relativ zu dem Grundkörper entgegen der Kupplungsrichtung verschiebbar ist, um die Elektrokontaktkupplung in ihre Kuppelstellung zu überführen. Vielmehr ist es beispielsweise auch denkbar, einen Verschiebemechanismus vorzusehen, über den die Elektrokontaktkupplung derart an dem Grundkörper des Kupplungskopfes angebracht ist, dass die Elektrokontaktkupplung relativ zu dem Kupplungskopfgehäuse und relativ zu dem Grundkörper in Kupplungsrichtung verschiebbar ist zum automatischen Überführen der Elektrokontaktkupplung in ihre Kuppelstellung nach Aktivieren des Verschiebemechanismus. Bei dieser Ausführungsform wird somit nur die Elektrokontaktkupplung und nicht der gesamte Grundkörper zusammen mit dem mindestens einen an dem Grundkörper angebrachten Kuppelverschluss relativ zu dem Kupplungskopfgehäuse verschoben. Als Verschiebemechanismus kommen unterschiedliche Ausführungsformen in Frage. Beispielsweise ist es denkbar, dass nach der Herstellung der mechanischen Verbindung zwischen dem Kupplungskopf und einem Gegenkupplungskopf ein Kupplungsmechanismus zum Kuppeln der Elektronkontaktkupplungen des Kupplungskopfes und des Gegenkupplungskopfes ausgelöst wird.

Auch ist es denkbar, dass beim Annähern des Gegenkupplungskopfes das Kupplungskopfgehäuse automatisch relativ zu dem Grundkörper entgegen der Kupplungsrichtung verschoben wird, wenn nämlich ein Bauteil des Gegenkupplungskopfes, wie etwa ein speziell hierfür vorgesehener und in Richtung Kupplungsebene zeigender Pin, beim Annähern des Gegenkupplungskopfes das Kupplungskopfgehäuse des Kupplungskopfes relativ zu dem Grundkörper des Kupplungskopfes entgegen der Kupplungsrichtung verschiebt.

Um zu erreichen, dass ein unbeabsichtigtes Kontaktieren des mindestens einen Kontaktstiftes der Elektrokontaktkupplung wirksam verhindert werden kann, wenn die Elektrokontaktkupplung nicht in ihrer Kuppelstellung (d.h. Normalstellung) vorliegt, ist in einer bevorzugten Weiterbildung der erfindungsgemäßen Lösung ein aus einem elektrisch isolierenden Material, insbesondere Kunststoff, gefertigter Führungskörper vorgesehen, welcher beispielsweise mit dem Kupplungskopfgehäuse verbunden ist und die Bewegung des mindestens einen Kontaktstiftes der Elektrokontaktkupplung relativ zu dem Kupplungskopfgehäuse beim Überführen der Elektrokontaktkupplung in ihre Kuppelstellung führt. Dem Führungskörper kommt insbesondere nicht nur eine Führungsfunktion zu, sondern auch die Funktion der Isolierung des mindestens einen Kontaktstiftes, wenn die Elektrokontaktkupplung nicht in ihrer Kuppelstellung vorliegt, d.h. wenn der mindestens eine Kontaktstift relativ zu dem Kupplungskopfgehäuse entgegen der Kupplungsrichtung verschoben ist. In diesem Zustand ist es bevorzugt, wenn der Kontaktstift vollständig innerhalb des Führungskörpers eingezogen ist und insbesondere kein Bereich des Kontaktstiftes außerhalb des Führungskörpers hervorsteht, so dass ein Kurzschluss oder ein unbeabsichtigtes Berühren des Kontaktstiftes wirksam verhindert wird.

Zusätzlich hierzu ist es von Vorteil, wenn der mindestens eine Kontaktstift der Elektrokontaktkupplung einen stirnseitigen Bereich aus einem elektrisch nicht-leitfähigen Material aufweist. Mit dieser Weiterbildung wird sichergestellt, dass - wenn der mindestens eine Kontaktstift relativ zu dem Kupplungskopfgehäuse entgegen der Kupplungsrichtung verschoben ist - auch die ggf. noch von Außen erreichbare Stirnseite des mindestens einen Kontaktstiftes isoliert ist, so dass ein Kurzschluss oder Korrosion wirksam verhindert werden kann. Außerdem ist es ungefährlich, wenn von einer Person die ggf. noch von Außen erreichbare Stirnseite des mindestens einen Kontaktstiftes berührt, da diese Stirnseite elektrisch isoliert ist.

In einer weiteren Ausbildung des erfindungsgemäßen Kupplungskopfes ist ferner eine Mittenstelleinrichtung zum Zentrieren des Kupplungskopfes vorgesehen. Vorzugsweise ist die Mittenstelleinrichtung eine mechanische Mittenstelleinrichtung, bei welcher die Zentrierung des Kupplungskopfes mittels mindestens einer Feder erfolgt. Derartige Mittenstelleinrichtungen sind aus dem Stand der Technik und insbesondere aus der Schienenfahrzeugtechnik bekannt und werden hierin nicht näher beschrieben.

Um zu erreichen, dass sich der Kupplungskopf relativ zu einem Gegenkupplungskopf automatisch ausrichtet, wenn sich der Kupplungskopf dem Gegenkupplungskopf beim Kuppelvorgang annähert, ist in einer bevorzugten Realisierung der erfindungsgemäßen Lösung eine Justierung vorgesehen. Denkbar hierbei ist es beispielsweise, eine Zentriereinrichtung zur Eigenzentrierung des Kupplungskopfes und eines mit dem Kupplungskopf zu kuppelnden Gegenkupplungskopfes vorzusehen, wobei beim Kupplungsvorgang Zentrierorgane des Kupplungskopfes mit entsprechend komplementär hierzu ausgebildeten Zentrierorganen des Gegenkupplungskopfes in Verbindung treten. Beispielsweise ist es denkbar, an der Stirnseite des Kupplungskopfgehäuses als Zentrierorgan einen Zentrierstift und zur Spiegelachse symmetrisch hierzu angeordnet eine Zentrierbuchse vorzusehen.

Zusätzlich oder alternativ hierzu kann das Kupplungskopfgehäuse mindestens einen in Kupplungsrichtung vorstehenden Bereich aufweisen, welcher ausgebildet ist, beim Annähern des Kupplungskopfes an den Gegenkupplungskopf in eine komplementär zum vorstehenden Bereich ausgebildete Aufnahme des Gegenkupplungskopfes einzugreifen und somit eine Eigenzentrierung beim Kupplungsvorgang zu realisieren.

In einer bevorzugten Weiterbildung der zuletzt genannten Ausführungsform ist vorgesehen, dass der vorstehende Bereich an der der Kupplungsebene zugewandten Seite des Kupplungskopfgehäuses zentral angeordnet ist und eine kegel- oder pyramidenstumpfförmige Geometrie aufweist. Bei dieser Ausführungsform kann die Elektrokontaktkupplung im Hinblick auf die Deckfläche des kegel- oder pyramidenstumpfförmigen Bereiches zentral angeordnet werden. Das zentrale Anordnen der Elektrokontaktkupplung erlaubt einen besonders kompakten Aufbau des Kupplungskopfes. Weiterhin ist es bei der zuletzt genannten Ausführungsform bevorzugt, wenn die Elektrokontaktkupplung relativ zu dem Kupplungskopfgehäuse, und insbesondere relativ zu dem vorstehenden Bereich des Kupplungskopfgehäuses, in Kupplungsrichtung verschiebbar ist, um bei Bedarf die Elektrokontaktkupplung in ihre Kuppelstellung zu überführen, in welcher mindestens ein Kontaktstift der Elektrokontaktkupplung durch die Deckfläche des kegel- oder pyramidenstumpfförmigen Bereiches läuft und von der Deckfläche in Kupplungsrichtung hervorsteht derart, dass dieser mindestens eine Kontaktstift in einer komplementär zum Kontaktstift ausgebildeten Buchse einer Elektrokontaktkupplung eines Gegenkupplungskopfes aufnehmbar ist.

Wie bereits angedeutet, ist es bei der zuletzt genannten Ausführungsform insbesondere bevorzugt, wenn ferner ein vorzugsweise aus einem elektrisch isolierenden Material, insbesondere Kunststoff, gebildeter Führungskörper vorgesehen ist, um die Bewegung des mindestens einen Kontaktstiftes relativ zu dem Kupplungskopfgehäuse beim Überführen der Elektrokontaktkupplung in ihre Kuppelstellung zu führen. Hierbei sollte der Führungskörper in eine in der Deckfläche des kegel- oder pyramidenstumpfförmigen Bereiches vorgesehene Öffnung gesetzt und mit dem Kupplungskopfgehäuse verbunden sein. Der Führungskörper weist dabei eine parallel zur Kupplungsrichtung verlaufende Bohrung auf, durch welche der mindestens eine Kontaktstift bei seiner Bewegung relativ zu dem Kupplungskopfgehäuse läuft.

Schließlich ist insbesondere bei den Ausführungsformen des erfindungsgemäßen Kupplungskopfes, bei denen ein vorstehender Bereich zentral an der der Kupplungsebene zugewandten Seite des Kupplungskopfgehäuses angeordnet ist, es bevorzugt, wenn ein erster Kuppelverschluss und ein zweiter Kuppelverschluss vorgesehen sind, wobei die beiden Kuppelverschlüsse in einer gemeinsamen horizontalen Ebene liegen und von dem zentral angeordneten vorstehenden Bereich jeweils seitlich beabstandet angeordnet sind. Das Vorsehen von zwei Kuppelverschlüssen ermöglicht einen besonders kompakten Aufbau des Kupplungskopfes, wobei zusätzlich eine sichere mechanische Verbindung zwischen dem Kupplungskopf und einem Gegenkupplungskopf realisierbar ist.

Est ist erfindungsgemäß vorgesehen, dass mit dem Kupplungskopf nicht nur automatisch Elektrokontaktterminals der Elektrokontaktkupplung, sondern auch pneumatische oder hydraulische Leitungen gekuppelt werden können. Zu diesem Zweck weist der Kupplungskopf eine pneumatische/hydraulische Leitungskupplung auf zum automatischen Kuppeln von mindestens einer pneumatischen bzw. hydraulischen Leitung.

Die Erfindung betrifft ferner eine Kupplungsvorrichtung zum mechanischen Verbinden von zwei Einheiten, insbesondere Fahrzeugeinheiten, wobei die Kupplungsvorrichtung einen mit einer der beiden Einheiten verbundenen Kupplungskopf der zuvor beschriebenen Art sowie einen mit der anderen der beiden Einheiten verbundenen Gegenkupplungskopf aufweist, wobei der Gegenkupplungskopf mindestens einen Kuppelverschluss zum Herstellen einer mechanischen Verbindung mit dem mindestens einen Kuppelverschluss des Kupplungskopfes und eine zur Elektrokontaktkupplung des Kupplungskopfes komplementär ausgebildete Elektrokontaktkupplung aufweist.

Nachfolgend werden unter Bezugnahme auf die beiliegenden Zeichnungen exemplarische Ausführungsformen des erfindungsgemäßen Kupplungskopfes beschrieben.

Es zeigen:
- Fig. 1: eine perspektivische Ansicht einer exemplarischen Ausführungsform des erfindungsgemäßen Kupplungskopfes in seiner Normalstellung;
- Fig. 2: eine perspektivische Ansicht der exemplarischen Ausführungsform des in Fig. 1 dargestellten Kupplungskopfes in seiner Kuppelstellung;
- Fig. 3: eine vertikale Schnittansicht des Kupplungskopfes gemäß Fig. 1;
- Fig. 4: eine horizontale Schnittansicht des Kupplungskopfes gemäß Fig. 1;
- Fig. 5: eine horizontale Schnittansicht des Kupplungskopfes gemäß Fig. 2;
- Fig. 6: eine perspektivische Ansicht des bei dem Kupplungskopf gemäß Fig. 1 zum Einsatz kommenden Grundkörpers mit den daran angebrachten Komponenten;
- Fig. 7: eine vertikale Schnittansicht eines weiteren exemplarischen Ausführungsbeispiels eines Kupplungskopfes gemäß der vorliegenden Erfindung;
- Fig. 8: eine horizontale Schnittansicht des Kupplungskopfes gemäß Fig. 7;
- Fig. 9: eine perspektivische Ansicht auf eine Ausführungsform eines Gegenkupplungskopfes, welcher komplementär zu dem Kupplungskopf der vorliegenden Erfindung ausgebildet ist;
- Fig. 10: eine horizontale Schnittansicht auf den Gegenkupplungskopf gemäß Fig. 9;
- Fig. 11: eine perspektivische Ansicht auf eine Kupplungsvorrichtung bestehend aus dem Kupplungskopf gemäß der Erfindung und einem Gegenkupplungskopf gemäß Fig. 9 im gekuppelten Zustand;
- Fig. 12: eine horizontale Schnittansicht durch die Kupplungsvorrichtung gemäß Fig. 11;
- Fig. 13a: eine schematische Ansicht auf die Elektrokontaktkupplungen des Kupplungskopfes gemäß einer Ausführungsform der vorliegenden Erfindung sowie einer Elektrokontaktkupplung eines Gegenkupplungskopfes gemäß einer weiteren Ausführungsform der vorliegenden Erfindung im ungekuppelten Zustand; und
- Fig. 13b: die Elektrokontaktkupplungen gemäß Fig. 13a im gekuppelten Zustand.

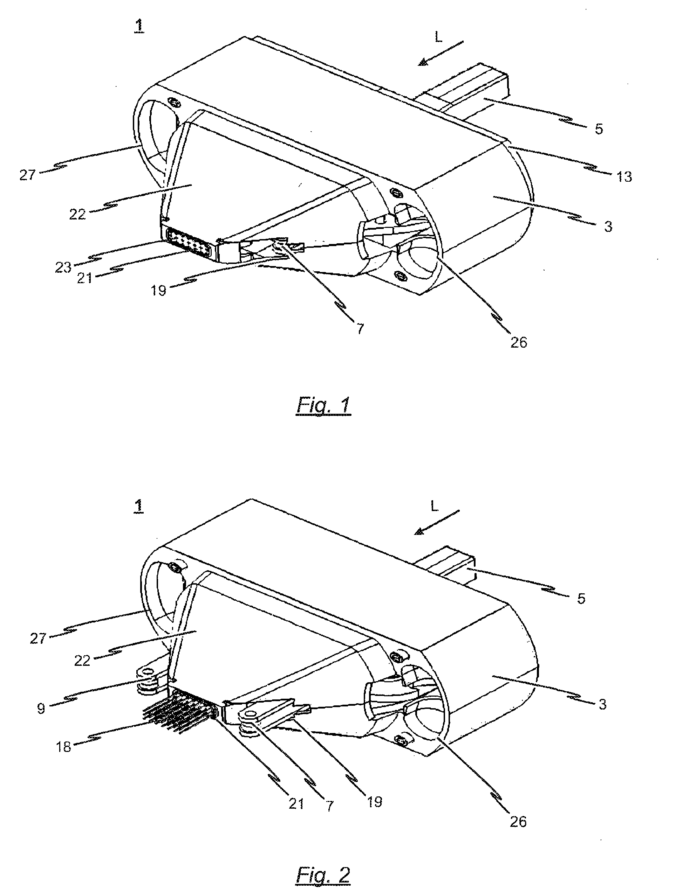

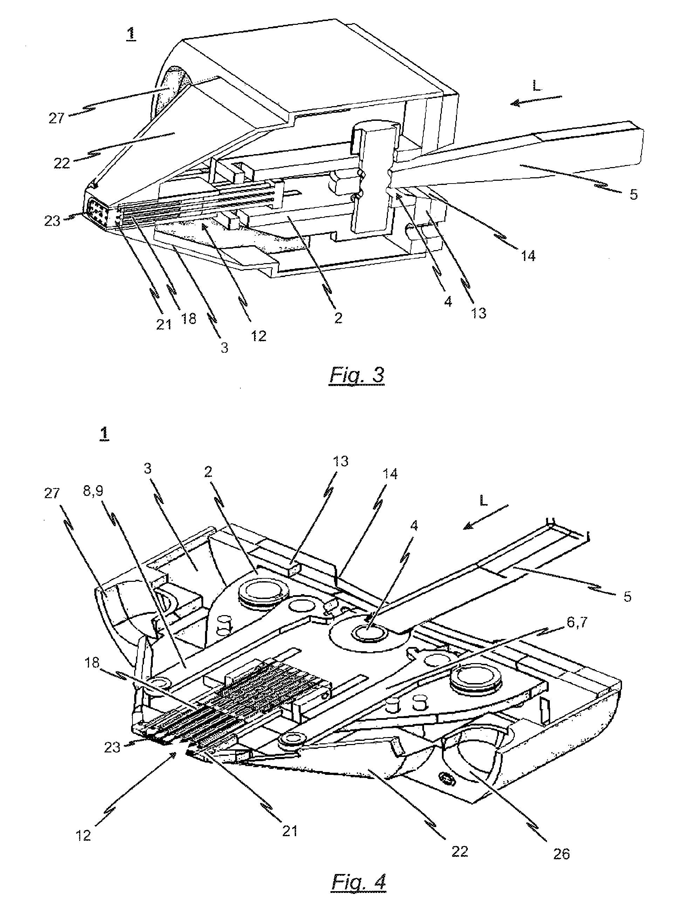

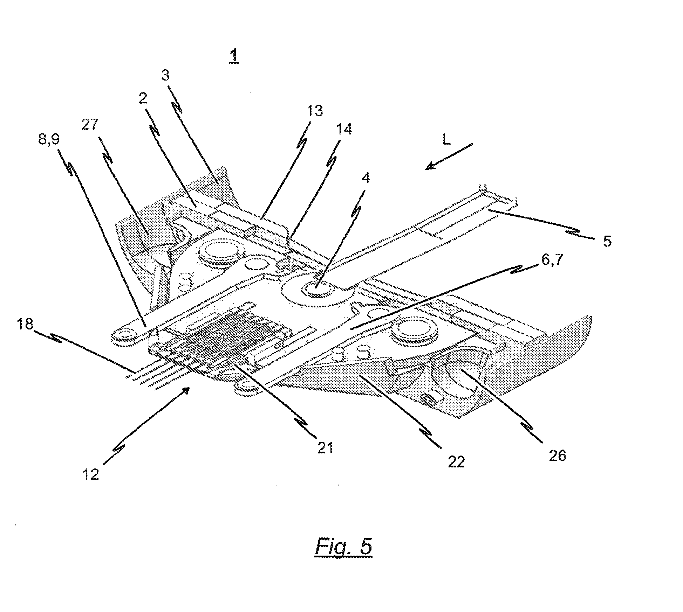

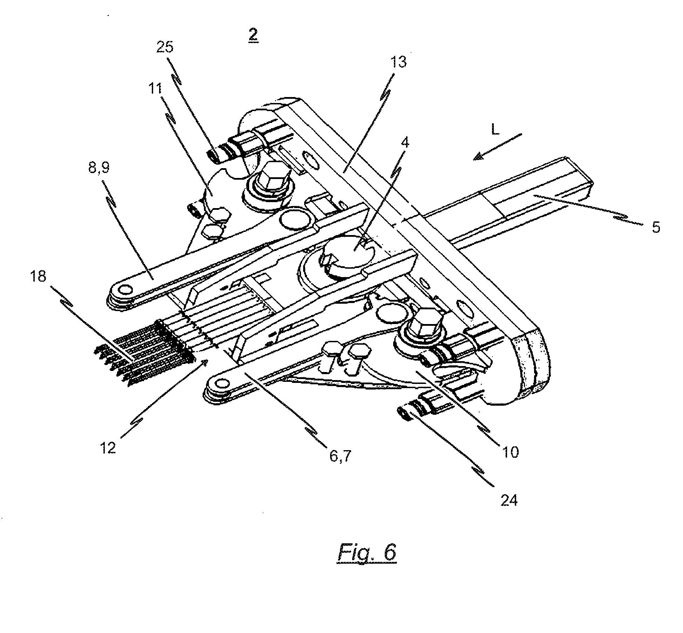

Nachfolgend wird unter Bezugnahme auf die Darstellungen in den Figuren 1 bis 6 eine exemplarische Ausführungsform des erfindungsgemäßen Kupplungskopfes 1 beschrieben. Im Einzelnen ist in Fig. 1 in einer perspektivischen Ansicht der Kupplungskopf 1 dieser exemplarischen Ausführungsform in seiner Normalstellung dargestellt. Fig. 2 zeigt hingegen den Kupplungskopf 1 in seiner Kuppelstellung, in welchem die Kontaktstifte 18 der Elektrokontaktkupplung sowie die Kuppelösen 7, 9 der beiden bei dem Kupplungskopf 1 zum Einsatz kommenden Kuppelverschlüsse 6, 8 aus dem Kupplungskopfgehäuse 3 in der der Kupplungsebene zugewandten Seite herausstehen. In den Figuren 3 und 4 sind jeweils Schnittdarstellungen des Kupplungskopfes 1 in seiner Normalstellung gezeigt. Fig. 5 zeigt eine horizontale Schnittansicht des Kupplungskopfes 1 in seiner Kuppelstellung, während Fig. 6 die an dem Grundkörper 2 des Kupplungskopfes 1 angebrachten Komponenten dargestellt sind.

Demgemäß weist der Kupplungskopf 1 gemäß der ersten Ausführungsform zwei Kuppelverschlüsse 6, 8 auf, zu denen jeweils eine Herzstück 10, 11 sowie eine Kuppelöse 7, 9 gehören. Die Herzstücke 10, 11 der beiden Kupplungsverschlüsse 6, 8 sind an einem Grundkörper 2 des Kupplungskopfes 1 in einer horizontalen Ebene verschwenkbar gelagert. An den jeweiligen Herzstücken 10, 11 greift jeweils eine Kuppelöse 7, 9 an. Die Kuppelverschlüsse 6, 8, welche bei dem Kupplungskopf 1 gemäß der dargestellten Ausführungsform zum Einsatz kommen, arbeiten nach dem Scharfenberg-Prinzip, welches allgemein aus der Schienenfahrzeugtechnik bekannt ist und hierin nicht näher beschrieben wird. Der Kupplungskopf 1 weist ferner eine an dem Grundkörper 2 angebrachte Elektrokontaktkupplung 12 auf. Die Elektrokontaktkupplung 12 umfasst eine Vielzahl von Kontaktstiften 18 zum Übertragen von elektrischen Signalen oder Energie.

Wie es insbesondere den Schnittdarstellungen in den Figuren 3 und 4 entnommen werden kann, ist der Grundkörper 2 mit den beiden Kuppelverschlüssen 6, 8 und der Elektrokontaktkupplung 12 in einem Kupplungskopfgehäuse 3 aufgenommen. Das Kupplungskopfgehäuse 3 wird an seiner der Kupplungsebene entgegen gesetzten Seite durch eine vertikale Wand (vertikal verlaufender Bereich 13) begrenzt, welche mit dem Grundkörper 2 fest verbunden ist und zu dem Grundkörper 2 gehört. Demnach sind bei dem Kupplungskopf 1 sowohl die beiden Kuppelverschlüsse 6, 8 als auch die Elektrokontaktkupplung 12, und insbesondere die jeweiligen Kontaktstifte 18 der Elektrokontaktkupplung 12, in dem Kupplungskopfgehäuse 3 gekapselt aufgenommen.

Wie es den Darstellungen in den Figuren 3 und 4 ferner entnommen werden kann, weist der Grundkörper 2 zusätzlich eine Anlenkung 4 auf, an welcher ein Kupplungsschaft 5 in horizontaler und vertikaler Ebene verschwenkbar angelenkt ist. Im Einzelnen ist bei der in den Figuren 1 bis 6 dargestellten Ausführungsform des erfindungsgemäßen Kupplungskopfes die Anlenkung 4 als Sphärolager ausgeführt, über welches der Kupplungsschaft 5 in horizontaler und vertikaler Ebene relativ zu dem Kupplungskopf 1 an dem Grundkörper 2 verschwenkbar angelenkt ist. Diese als Sphärolager ausgeführte Anlenkung 4 lässt zusätzlich eine Torsionsbewegung des Kupplungsschafts 5 relativ zu dem Kupplungskopf 1 zu. Der horizontale und vertikale Schwenkbereich des Kupplungskopfes 1 relativ zu dem Kupplungsschaft 5 wird bei der dargestellten Ausführungsform durch eine zentral in dem bereits erwähnten vertikal verlaufenden Bereich 13 angeordnete Öffnung 14 festgelegt. Wie bereits angedeutet, definiert der vertikal verlaufende Bereich 13 die der Kupplungsebene abgewandte Seite des Grundkörpers 2.

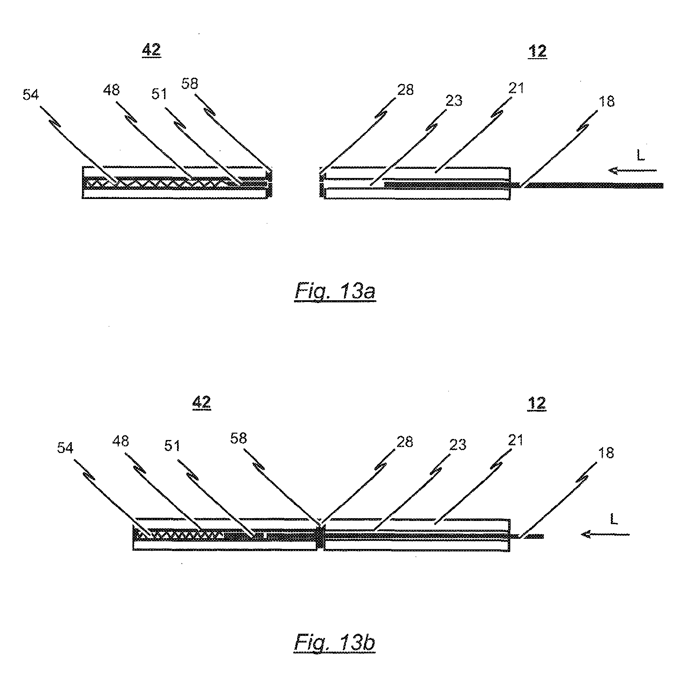

Ein Vergleich der Darstellungen in den Figuren 1 und 2 bzw. 4 und 5 zeigt, dass bei der erfindungsgemäßen Lösung die Elektrokontaktkupplung 12 relativ zu dem Kupplungsgehäuse 3 in Kupplungsrichtung L des Kupplungskopfes 1 verschiebbar ist, um die Elektrokontaktkupplung 12 in ihre Kuppelstellung zu überführen (vgl. Fig. 2 bzw. Fig. 5), in welcher die Kontaktstifte 18 der Elektrokontaktkupplung 12 zumindest bereichsweise außerhalb des Kupplungskopfgehäuses 3 derart freiliegen, dass diese Kontaktstifte 18 in komplementär zu den Kontaktstiften 18 ausgebildeten Buchsen 48 einer Elektrokontaktkupplung 42 eines Gegenkupplungskopfes 31 aufnehmbar sind. Der genaue Mechanismus des Durchschaltens der Kontaktstifte 18 wird nachfolgend unter Bezugnahme auf die Darstellungen in den Figuren 13a und 13b näher beschrieben.

Im Einzelnen ist bei der in den Figuren 1 bis 6 dargestellten Ausführungsform des erfindungsgemäßen Kupplungskopfes 1 zum automatischen Überführen der an dem Grundkörper 2 angebrachten Elektrokontaktkupplung 12 in ihre Kuppelstellung vorgesehen, dass das Kupplungskopfgehäuse 3 relativ zu dem Grundkörper 2 entgegen der Kupplungsrichtung L verschiebbar ist. Die Bewegung des Kupplungskopfgehäuses 3 relativ zu dem Grundkörper 2 erfolgt bei der dargestellten Ausführungsform des Kupplungskopfes 1, wenn auf das Kupplungskopfgehäuse 3 eine vorab festgelegte oder festlegbare Mindestkraft entgegen der Kupplungsrichtung L einwirkt. Diese Mindestkraft tritt insbesondere dann auf, wenn der Kupplungskopf 1 bei einem Kuppelvorgang gegen einen entsprechend komplementär ausgeführten Gegenkupplungskopf 31 anstößt. Obwohl in den Zeichnungen nicht explizit dargestellt, ist es denkbar, dass vorzugsweise innerhalb des Kupplungskopfgehäuses 3 eine Vorspanneinrichtung, beispielsweise in Gestalt einer Federeinrichtung, vorgesehen ist, um das Kupplungskopfgehäuse 3 gegenüber dem Grundkörper 2 in Kupplungsrichtung L vorzuspannen. Die Vorspannkraft lässt sich in einer besonders leicht zu realisierenden Weise durch eine geeignete Wahl der Federkennlinie der Federeinrichtung festlegen. Diese Vorspannkraft definiert wiederum die Mindestkraft, welche aufzubringen ist, um das Kupplungskopfgehäuse 3 relativ zu dem Grundkörper 2 entgegen der Kupplungsrichtung L zu verschieben und die an dem Grundkörper 2 angebrachte Elektrokontaktkupplung 12 in ihre Kuppelstellung zu überführen.

Die erfindungsgemäße Lösung ist nicht auf den zuvor beschriebenen Mechanismus zum Verschieben des Kupplungskopfes relativ zu dem Grundkörper beschränkt. Beispielsweise ist es auch denkbar, einen Verschiebemechanismus vorzusehen, über den die Elektrokontaktkupplung 12 an dem Grundkörper 2 angebracht ist, wobei die Elektrokontaktkupplung 12 relativ zu dem Kupplungskopfgehäuse 3 und relativ zu dem Grundkörper 2 in Kupplungsrichtung L verschiebbar ist, wenn der Verschiebemechanismus aktiviert wird.

Wie es den Darstellungen in den Figuren 2 und 5 entnommen werden kann, liegen in der Kuppelstellung des Kupplungskopfes 1 nicht nur die Kontaktstifte 18 der Elektrokontaktkupplung 12 außerhalb des Kupplungskopfgehäuses 3 frei, sondern auch die vorderen Endbereiche der bereits erwähnten Kuppelösen 7, 9 des ersten und zweiten Kuppelverschlusses 6, 8. Hierzu sind in der der Kupplungsebene zugewandten Seite des Kupplungskopfgehäuses 3 jeweils Öffnungen 19, 20 vorgesehen, durch welche die vorderen Endbereiche der Kuppelösen 7, 9 der beiden Kuppelverschlüsse 6, 8 laufen, wenn das Kupplungskopfgehäuse 3 in seinem relativ zum Grundkörper 2 entgegen der Kupplungsrichtung L verschobenen Zustand vorliegt (vgl. die Darstellung in Fig. 4).

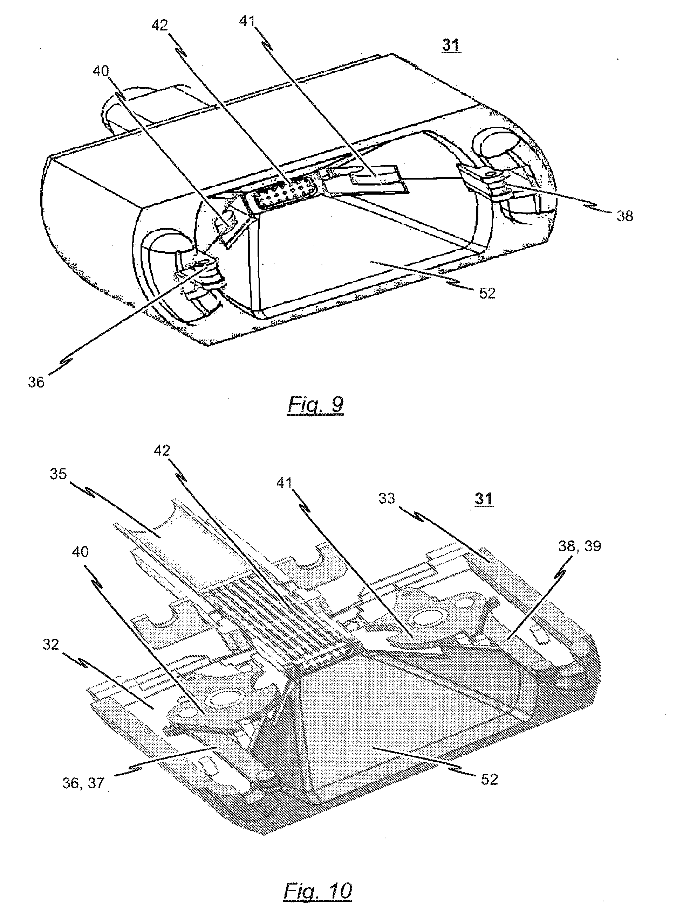

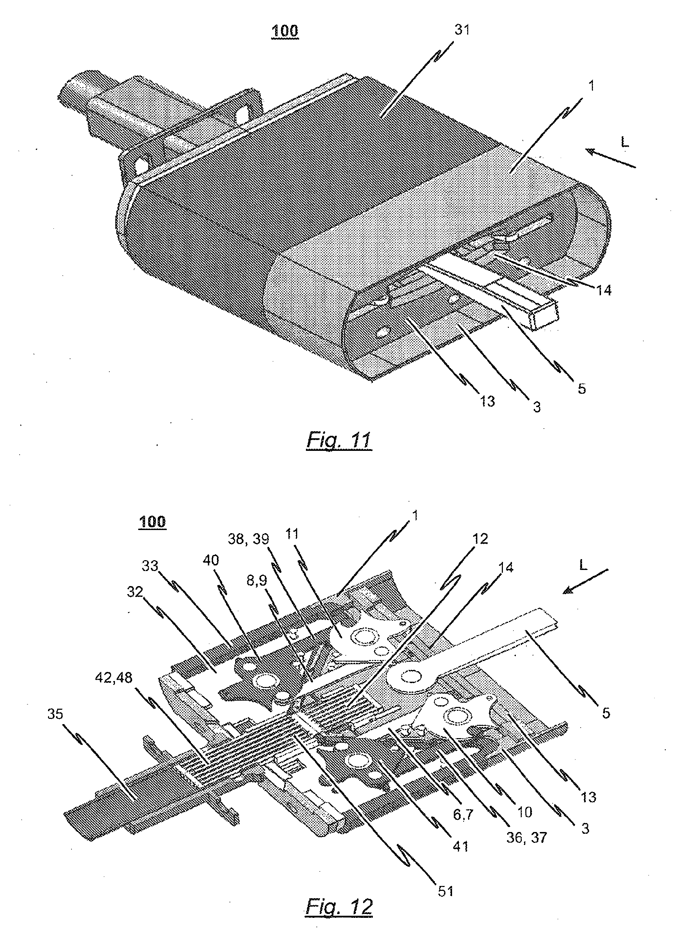

Um beim Annähern des Kupplungskopfes 1 an einen Gegenkupplungskopf 31 ein automatisches Ausrichten des Kupplungskopfes 1 relativ zu dem Gegenkupplungskopf 31 zu erreichen, ist bei dem erfindungsgemäßen Kupplungskopf 1 eine Justierung vorgesehen. Bei der exemplarischen Ausführungsform des Kupplungskopfes 1 weist hierzu das Kupplungskopfgehäuse 3 einen in Kupplungsrichtung L vorstehenden Bereich 22 auf, welcher ausgebildet ist, beim Annähern des Kupplungskopfes 1 an den Gegenkupplungskopf 31 in eine komplementär zum vorstehenden Bereich 22 ausgebildete Aufnahme 52 des Gegenkupplungskopfes 31 einzugreifen. In diesem Zusammenhang wird auch auf die Darstellung in Fig. 12 verwiesen, welche eine horizontale Schnittansicht auf eine Kupplungsvorrichtung 100 zeigt, in welcher der Kupplungskopf 1 gemäß den Darstellungen in den Figuren 1 bis 5 mit einem Gegenkupplungskopf 31 gemäß den Darstellungen in den Figuren 9 und 10 gekuppelt ist.

Die exemplarische Ausführungsform des erfindungsgemäßen Kupplungskopfes 1 zeichnet sich dadurch aus, dass der in Kupplungsrichtung L vorstehende Bereich 22 des Kupplungskopfgehäuses 3 zentral an der der Kupplungsebene zugewandten Seite des Kupplungskopfgehäuses 3 angeordnet ist und eine kegel- oder pyramidenstumpfförmige Geometrie aufweist. Wie es insbesondere den Darstellungen in den Figuren 1 bis 5 entnommen werden kann, ist bei der exemplarischen Ausführungsform des erfindungsgemäßen Kupplungskopfes 1 die Elektrokontaktkupplung 12 im Hinblick auf die Deckfläche des kegel- bzw. pyramidenstumpfförmigen Bereiches 22 zentral angeordnet.

Ein Vergleich der Figuren 1 und 2 bzw. 4 und 5 zeigt, dass bei der exemplarischen Ausführungsform des erfindungsgemäßen Kupplungskopfes 1 die Kontaktstifte 18 der Elektrokontaktkupplung 12 in der Kuppelstellung der Elektrokontaktkupplung 12 durch die Deckfläche des kegel- bzw. pyramidenstumpfförmigen Bereiches 22 laufen und von der Deckfläche in Kupplungsrichtung L derart hervorstehen, dass diese in entsprechend komplementär ausgeführte Buchsen 48 einer Elektrokontaktkupplung eines Gegenkupplungskopfes 31 (vgl. Fig. 9 und 10) aufgenommen werden können.

Bei der exemplarischen Ausführungsform der erfindungsgemäßen Lösung ist ferner vorgesehen, dass der Kupplungskopf 1 insgesamt zwei pneumatische/hydraulische Leitungskupplungen 24, 25 aufweist zum automatischen Kuppeln von pneumatischen bzw. hydraulischen Leitungen. In diesem Zusammenhang wird auf die Darstellung in Fig. 6 verwiesen. Im Einzelnen sind in der der Kupplungsebene zugewandten Seite des Kupplungskopfgehäuses 3 an den erweiterten Gehäusebereichen zwei zusätzliche Öffnungen 26, 27 vorgesehen, in welchen die jeweiligen Leitungsanschlüsse der beiden Leitungskupplungen 24, 25 liegen, um im gekuppelten Zustand mit entsprechend komplementär ausgebildeten Leitungsanschlüssen eines Gegenkupplungskopfes 31 verbindbar zu sein. Die erweiterten Gehäusebereiche dienen insbesondere zum Schutz der Kuppelösen 36, 37, 38, 39 des Gegenkupplungskopfes 31.

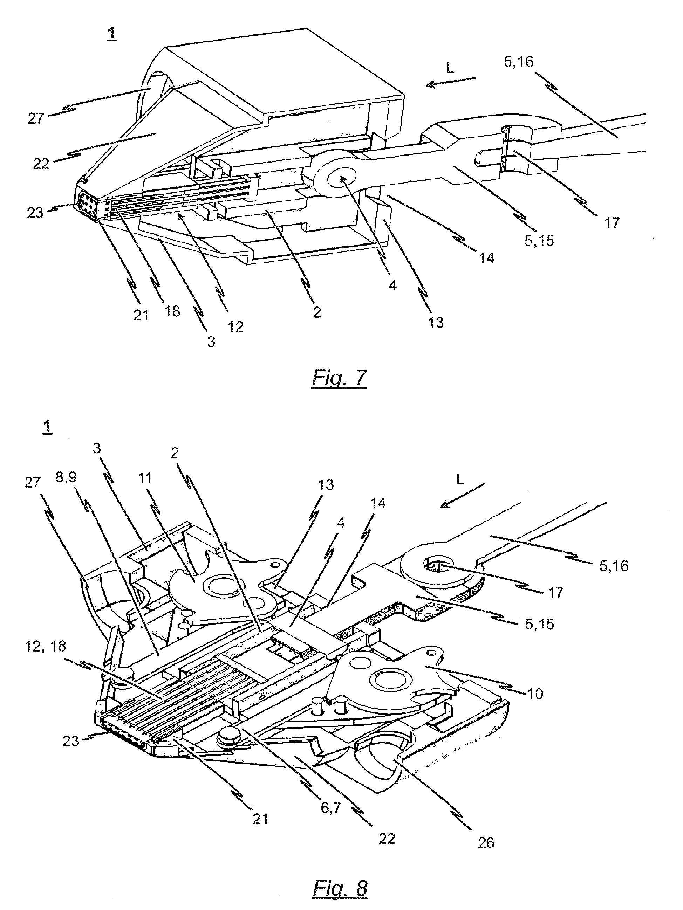

Die in den Figuren 7 und 8 dargestellte Ausführungsform des erfindungsgemäßen Kupplungskopfes 1 unterscheidet sich von der zuvor unter Bezugnahme auf die Darstellungen in den Figuren 1 bis 6 dargestellten Ausführungsform durch die Ausführung der Anlenkung 4. Im Einzelnen ist bei der in den Figuren 7 und 8 dargestellten Ausführungsform die Anlenkung 4 als Drehgelenk ausgeführt, über welches der Kupplungsschaft 5 in vertikaler Richtung relativ zu dem Kupplungskopf 1 an dem Grundkörper 2 verschwenkbar angelenkt ist. Darüber hinaus ist bei der in den Figuren 7 und 8 dargestellten Ausführungsform der Kupplungsschaft 5 zweiteilig ausgeführt und weist ein erstes Schaftteil 15 sowie ein zweites Schaftteil 16 auf, welche über ein Gelenk 17 in horizontaler Ebene relativ zueinander verschwenkbar verbunden sind. Selbstverständlich ist es bei dieser Ausführungsform aber auch denkbar, das Gelenk 17 innerhalb des Kupplungskopfgehäuses 3 aufzunehmen. Hierzu ist es lediglich erforderlich, das Kupplungskopfgehäuse 3 entsprechend länger auszuführen.

In den Figuren 9 und 10 ist eine exemplarische Ausführungsform eines Gegenkupplungskopfes 31 dargestellt, mit welchem der Kupplungskopf 1 gemäß der vorliegenden Erfindung kuppelbar ist. Im Einzelnen weist der Gegenkupplungskopf 31 ebenfalls zwei Kuppelverschlüsse 36, 38 auf, welche mit den entsprechenden Kuppelverschlüssen 6, 8 des Kupplungskopfes 1 im gekuppelten Zustand eine mechanische Verbindung ausbilden. Hierzu weisen die Kuppelverschlüsse 36, 38 des Gegenkupplungskopfes 31 jeweils ein Herzstück 40, 41 sowie entsprechende Kuppelösen auf.

Darüber hinaus weist der Gegenkupplungskopf 31 eine komplementär zu dem vorstehenden Bereich 22 ausgebildete Aufnahme 52 auf, welche zur Justierung des Kupplungskopfes 1 relativ zu dem Gegenkupplungskopf 31 beim Kuppelvorgang dient. Im Unterschied zu dem Kupplungskopf 1 kann der Gegenkupplungskopf 31 starr mit der zugeordneten Fahrzeugeinheit verbunden sein. Selbstverständlich ist es aber auch denkbar, wie bei dem Kupplungskopf 1 eine entsprechende Anlenkung vorzusehen.

Die Elektrokontaktkupplung 42 des Gegenkupplungskopfes 31 ist komplementär zu der Elektrokontaktkupplung 12 des Kupplungskopfes 1 ausgebildet und besteht im Wesentlichen aus einer Vielzahl von Buchsen 48, in welchen die Kontaktstifte 18 der Elektrokontaktkupplung 12 des Kupplungskopfes 1 aufnehmbar sind.

In den Figuren 11 und 12 ist jeweils in einer perspektivischen Ansicht eine Ausführungsform einer Kupplungsvorrichtung 100 dargestellt, welche sich aus einem Kupplungskopf 1 gemäß der vorliegenden Erfindung sowie einem Gegenkupplungskopf 31 ebenfalls gemäß der vorliegenden Erfindung zusammensetzt. Wie es insbesondere der Schnittdarstellung in Fig. 12 entnommen werden kann, dienen im gekuppelten Zustand die jeweiligen Kuppelverschlüsse 6, 8 des Kupplungskopfes 1 einerseits und die jeweiligen Kuppelverschlüsse 36, 38 des Gegenkupplungskopfes 31 andererseits zum Ausbilden einer mechanischen (starren) Verbindung zwischen dem Kupplungskopf 1 und dem Gegenkupplungskopf 31. Nur der Übersichtlichkeit halber ist in der Fig. 12 nicht die Leitungskupplung 24, 25 dargestellt.

Zentral angeordnet sind die beiden Elektrokontaktkupplungen 12, 42 des Kupplungskopfes 1 sowie des Gegenkupplungskopfes 31, welche in den Figuren 11 und 12 in einem gekuppelten Zustand vorliegen.

Nachfolgend wird unter Bezugnahme auf die Darstellungen in den Figuren 13a und 13b der Mechanismus zum Kuppeln der Elektrokontaktkupplungen 12, 42 des Kupplungskopfes 1 bzw. Gegenkupplungskopfes 42 beschrieben. Hierbei zeigt Fig. 13a die Elektrokontaktkupplung 12 des Kupplungskopfes 1 in ihrer Normalstellung, in welchem die Kontaktstifte 18 nicht außerhalb des Kupplungskopfgehäuses 3 vorliegen. Hierzu kommt ein aus einem elektrisch isolierenden Material, insbesondere Kunststoff, gefertigter Führungskörper 21 zum Einsatz, welcher - wie es beispielsweise der Darstellung in Fig. 3 entnommen werden kann - mit dem Kupplungskopfgehäuse 3 fest verbunden ist. Dieser Führungskörper 21 weist parallel zur Kupplungsrichtung L verlaufende Bohrungen 23 auf, durch welche die jeweiligen Kontaktstifte 18 der Elektrokontaktkupplung 12 des Kupplungskopfes 1 bei ihrer Bewegung relativ zu dem Kupplungskopfgehäuse 3 laufen. Am kupplungsebenenseitigen Endbereich des Führungskörpers 21 ist eine Abdichtung 28, beispielsweise in Gestalt eines O-Ringes, vorgesehen, um die Bohrungen 23 des Führungskörpers 21 nach außen hin abzudichten und so die jeweiligen Kontaktstifte 18 der Elektrokontaktkupplung 12 vor Witterungseinflüssen zu schützen, wenn die Elektrokontaktkupplung 12 des Kupplungskopfes 1 in ihrer Normalstellung vorliegt.

Andererseits weist die Elektrokontaktkupplung 42 des Gegenkupplungskopfes 31 komplementär zu den Kontaktstiften 18 ausgebildete Buchsen 48 auf, in welchen die Kontaktstifte 18 aufnehmbar sind, um die elektrischen Leitungen zwischen dem Kupplungskopf 1 und dem Gegenkupplungskopf 31 kuppeln zu können. Um den elektrisch leitfähigen Bereich der Buchse 48 im ungekuppelten Zustand der Elektrokontaktkupplung 42 vor Witterungseinflüssen zu schützen und ein unbeabsichtigtes Kontaktieren des leitfähigen Bereiches zu vermeiden, ist bei der in den Figuren 13a und 13b dargestellten Ausführungsform der Elektrokontaktkupplung 42 ein relativ zu der Buchse 48 in Kupplungsrichtung L verschiebbar gelagertes Isolierelement 51 vorgesehen, welches mit Hilfe einer Feder 54 in Richtung Kupplungsebene vorgespannt wird. Des Weiteren ist der Stirnbereich der Buchsen 48 mit Hilfe eines O-Ringes 58 abgedichtet. Des weiteren ist es denkbar, dass die Kontaktstifte 18 der Elektrokontaktkupplung 12 einen stirnseitigen Bereich aus einem elektrisch nicht-leitfähigen Material aufweisen. Mit dieser Weiterbildung wird sichergestellt, dass - wenn die Kontaktstifte 18 relativ zu dem Kupplungskopfgehäuse 3 entgegen der Kupplungsrichtung L verschoben sind - auch die ggf. noch von Außen erreichbaren Stirnseiten der Kontaktstifte 18 isoliert sind, so dass ein Kurzschluss oder Korrosion wirksam verhindert werden kann. Außerdem ist es ungefährlich, wenn von einer Person die ggf. noch von Außen erreichbare Stirnseite des mindestens einen Kontaktstiftes 18 berührt, da diese Stirnseite elektrisch isoliert ist.

Beim Kuppelvorgang werden - wie bereits zuvor ausgeführt - die Kontaktstifte 18 der Elektrokontaktkupplung 12 des Kupplungskopfes 1 relativ zu dem Kupplungskopfgehäuse 3 und somit auch relativ zu dem mit dem Kupplungskopfgehäuse 3 fest verbundenen Führungskörper 21 in Kupplungsrichtung L verschoben, infolgedessen der vordere Bereich der Kontaktstifte 18 aus dem Kupplungskopfgehäuse 3 hervorsteht. Auf diese Weise ist es möglich, dass der hervorstehende vordere Bereich der Kontaktstifte 18 in den Buchsen 48 der Elektrokontaktkupplung des Gegenkupplungskopfes aufgenommen werden kann. Hierzu verschiebt der Kontaktstift 18 das relativ zu der Buchse 48 in Kupplungsrichtung L verschiebbar gelagerte Isolierelement 51 und ermöglicht eine elektrische Kontaktierung des vorderen Bereiches des Kontaktstiftes 18 mit dem leitfähigen Bereich der Buchse 48.

### Bezugszeichenliste

- 1: Kupplungskopf
- 2: Grundkörper
- 3: Kupplungskopfgehäuse
- 4: Anlenkung
- 5: Kupplungsschaft
- 6: erster Kuppelverschluss des Kupplungskopfes
- 7: Kuppelöse des ersten Kuppelverschlusses (6)
- 8: zweiter Kuppelverschluss des Kupplungskopfes
- 9: Kuppelöse des zweiten Kuppelverschlusses (8)
- 10: Herzstück des ersten Kuppelverschlusses (6)
- 11: Herzstück des zweiten Kuppelverschlusses (8)
- 12: Elektrokontaktkupplung des Kupplungskopfes
- 13: vertikaler Bereich des Grundkörpers (2)
- 14: Öffnung im vertikalen Bereich des Grundkörpers
- 15: erstes Schaftteil
- 16: zweites Schaftteil
- 17: Gelenk
- 18: Kontaktstift
- 19: Öffnung für die Kuppelöse (7)
- 20: Öffnung für die Kuppelöse (9)
- 21: Führungskörper
- 22: vorstehender Bereich/kegel- oder pyramidenstumpfförmiger Bereich
- 23: Bohrung im Führungskörper (21)
- 24: Leitungskupplung
- 25: Leitungskupplung
- 26: Erweitetet Gehäusebereich/Öffnung für Luftleitungskupplung (24)
- 27: Erweitetet Gehäusebereich/Öffnung für Luftleitungskupplung (25)
- 28: Abdichtung/O-Ring
- 31: Gegenkupplungskopf
- 32: Grundkörper des Gegenkupplungskopfes
- 33: Kupplungskopfgehäuse des Gegenkupplungskopfes (31)
- 35: Kupplungsschaft des Gegenkupplungskopfes
- 36: erster Kuppelverschluss des Gegenkupplungskopfes
- 37: Kuppelöse des ersten Kuppelverschlusses (36)
- 38: zweiter Kuppelverschluss des Gegenkupplungskopfes
- 39: Kuppelöse des zweiten Kuppelverschlusses (38)
- 40: Herzstück des ersten Kuppelverschlusses (36)
- 41: Herzstück des zweiten Kuppelverschlusses (38)
- 42: Elektrokontaktkupplung des Gegenkupplungskopfes (31)
- 48: Buchse
- 51: Isolierelement
- 52: Aufnahme
- 54: Feder
- 58: Abdichtung/O-Ring
- 100: Kupplungsvorrichtung
- L: Kuppelrichtung des Kupplungskopfes (1)

## Patentansprüche

1. Kupplungskopf (1) einer Kupplungsvorrichtung (100) zum mechanischen Verbinden von zwei Einheiten, insbesondere Fahrzeugeinheiten, wie etwa zwei benachbarte Wagenkästen eines mehrteiligen Fahrzeugverbundes oder ein Pick-Up-Aufbau und die Ladefläche eines Kraftfahrzeuges, mit mindestens einem Kuppelverschluss (6, 8) zum Herstellen einer mechanischen Verbindung mit einem Kuppelverschluss (36, 38) eines Gegenkupplungskopfes (31) und mit einer Elektrokontaktkupplung (12) zum Kuppeln von mindestens einer elektrischen Leitung zwischen dem Kupplungskopf (1) und dem Gegenkupplungskopf (31), wobei der Kupplungskopf (1) ferner folgendes aufweist:
- einen Grundkörper (2), an welchem der mindestens eine Kuppelverschluss (6, 8) und/oder die Elektrokontaktkupplung (12) angebracht sind/ist; und
- ein Kupplungskopfgehäuse (3), in welchem der Grundkörper (2) mit dem mindestens einen Kuppelverschluss (6, 8) und/oder mit der Elektrokontaktkupplung (12) aufgenommen ist,
wobei der Grundkörper (2) eine Anlenkung (4) aufweist, an welcher ein Kupplungsschaft (5) in horizontaler und/oder vertikaler Ebene verschwenkbar angelenkt ist,
**dadurch gekennzeichnet, dass** ferner eine pneumatische/ hydraulische Leitungskupplung (24, 25) vorgesehen ist zum automatischen Kuppeln von mindestens einer pneumatischen bzw. hydraulischen Leitung,
wobei die pneumatische/hydraulische Leitungskupplung (24, 25) vorzugsweise mindestens einen am Grundkörper (2) angebrachten pneumatische/hydraulische Leitungsanschluss aufweist, welcher zusammen mit dem Grundkörper (2) relativ zu dem Kupplungskopfgehäuse (3) in Kupplungsrichtung (L) verschiebbar ist, und
wobei in der der Kupplungsebene zugewandten Seite des Kupplungskopfgehäuses (3) vorzugsweise mindestens eine Öffnung (26, 27) vorgesehen ist, in welcher der mindestens eine pneumatische/hydraulische Leitungsanschluss liegt bzw. durch welche der mindestens eine pneumatische/hydraulische Leitungsanschluss läuft, wenn das Kupplungskopfgehäuse (3) in seinem relativ zu dem Grundkörper (2) entgegen der Kupplungsrichtung (L) verschobenen Zustand vorliegt.

2. Kupplungskopf (1) nach Anspruch 1,
wobei der Grundkörper (2) an seiner der Kupplungsebene abgewandten Seite einen vertikal verlaufenden Bereich (13) mit einer zentral angeordneten Öffnung (14) aufweist, durch welche der Kupplungsschaft (5) läuft, wobei die Öffnung (14) den Schwenkbereich des Kupplungskopfes (1) relativ zum Kupplungsschaft (5) festlegt.

3. Kupplungskopf (1) nach Anspruch 1 oder 2,
wobei die Anlenkung (4) als Sphärolager ausgeführt ist, über welches der Kupplungsschaft (5) in horizontaler und vertikaler Ebene relativ zu dem Kupplungskopf (1) an dem Grundkörper (2) verschwenkbar angelenkt ist, wobei das Sphärolager vorzugsweise ferner einen Torsionsbewegung des Kupplungsschafts (5) relativ zu dem Kupplungskopf (1) zulässt; oder wobei die Anlenkung (4) als Drehgelenk ausgeführt ist, über welches der Kupplungsschaft (5) in horizontaler oder vertikaler Ebene relativ zu dem Kupplungskopf (1) an dem Grundkörper (2) verschwenkbar angelenkt ist, und wobei der Kupplungsschaft (5) vorzugsweise ein erstes Schaftteil (15) und ein zweites Schaftteil (16) aufweist, welche über ein Gelenk (17) in vertikaler oder horizontaler Ebene relativ zueinander verschwenkbar verbunden sind.

4. Kupplungskopf (1) nach einem der Ansprüche 1 bis 3,
wobei die Elektrokontaktkupplung (12) relativ zu dem Kupplungskopfgehäuse (3) in Kupplungsrichtung (L) des Kupplungskopfes (1) verschiebbar ist zum Überführen der Elektrokontaktkupplung (12) in ihre Kuppelstellung, in welcher mindestens ein Kontaktstift (18) der Elektrokontaktkupplung (12) zumindest bereichsweise außerhalb des Kupplungskopfgehäuses (3) freiliegt derart, dass dieser in einer komplementär zum Kontaktstift (18) ausgebildeten Buchse (48) einer Elektrokontaktkupplung (42) eines Gegenkupplungskopfes (31) aufnehmbar ist.

5. Kupplungskopf (1) nach Anspruch 4,
wobei das Kupplungskopfgehäuse (3) relativ zu dem Grundkörper (2) entgegen der Kupplungsrichtung (L) verschiebbar ist zum automatischen Überführen der an dem Grundkörper (2) angebrachten Elektrokontaktkupplung (12) in ihre Kuppelstellung, wenn auf das Kupplungskopfgehäuse (3) eine vorab festgelegte oder festlegbare Mindestkraft entgegen der Kupplungsrichtung (L) einwirkt; und wobei vorzugsweise eine Federeinrichtung vorgesehen ist, zum Vorspannen des Kupplungskopfgehäuses (3) gegenüber dem Grundkörper (2) in Kupplungsrichtung (L), wobei die Vorspannkraft vorzugsweise durch eine geeignete Wahl der Federkennlinie der Federeinrichtung festlegbar ist.

6. Kupplungskopf (1) nach Anspruch 5,
wobei der mindestens eine Kuppelverschluss (6, 8) eine Kuppelöse (7, 9) aufweist, welche ausgelegt ist, mit einem Kuppelverschluss (36, 38) eines Gegenkupplungskopfes (31), und insbesondere mit einem Herzstück (40 ,41) eines Kuppelverschlusses (36, 38) eines Gegenkupplungskopfes (31), eine lösbare mechanische Verbindung zu bilden, und
wobei in der der Kupplungsebene zugewandten Seite des Kupplungskopfgehäuses (3) mindestens eine Öffnung (19, 20) vorgesehen ist, durch welche die Kuppelöse (7, 9) des mindestens einen Kuppelverschlusses (6, 8) läuft, wenn das Kupplungskopfgehäuse (3) in seinem relativ zum Grundkörper (2) entgegen der Kupplungsrichtung (L) verschobenen Zustand vorliegt.

7. Kupplungskopf (1) nach Anspruch 4,
wobei die Elektrokontaktkupplung (12) über einen Verschiebemechanismus derart an dem Grundkörper (2) angebracht ist, dass die Elektrokontaktkupplung (12) relativ zu dem Kupplungskopfgehäuse (3) und relativ zu dem Grundkörper (2) in Kupplungsrichtung (L) verschiebbar ist zum automatischen Überführen der Elektrokontaktkupplung (12) in ihre Kuppelstellung nach Aktivieren des Verschiebemechanismus.

8. Kupplungskopf (1) nach einem der Ansprüche 4 bis 7,
wobei ferner ein vorzugsweise aus einem elektrisch isolierenden Material, insbesondere Kunststoff, gefertigter Führungskörper (21) vorgesehen ist zum Führen der Bewegung des mindestens einen Kontaktstiftes (18) relativ zu dem Kupplungskopfgehäuse (3) beim Überführen der Elektrokontaktkupplung (12) in ihre Kuppelstellung.

9. Kupplungskopf (1) nach einem der Ansprüche 1 bis 8,
wobei ferner eine Mittenstelleinrichtung zum Zentrieren des Kupplungskopfes (1) vorsehen ist, wobei die Mittenstelleinrichtung vorzugsweise eine mechanische Mittenstelleinrichtung ist, bei welcher die Zentrierung des Kupplungskopfes (1) mittels mindestens einer Feder erfolgt.

10. Kupplungskopf (1) nach einem der Ansprüche 1 bis 9,
wobei ferner eine Justierung vorgesehen ist zum Ausrichten des Kupplungskopfes (1) relativ zu einem Gegenkupplungskopf (31) beim Annähern des Kupplungskopfes (1) an den Gegenkupplungskopf (31), - wobei hierzu das Kupplungskopfgehäuse (3) vorzugsweise mindestens einen in Kupplungsrichtung (L) vorstehenden Bereich (22) aufweist, welcher ausgebildet ist, beim Annähern des Kupplungskopfes (1) an den Gegenkupplungskopf (31) in eine komplementär zum vorstehenden Bereich (22) ausgebildete Aufnahme (52) des Gegenkupplungskopfes (31) einzugreifen.

11. Kupplungskopf (1) nach Anspruch 10,
wobei der vorstehende Bereich (22) an der der Kupplungsebene zugewandten Seite des Kupplungskopfgehäuses (3) zentral angeordnet ist und eine kegel- oder pyramidenstumpfförmige Geometrie aufweist, und wobei die Elektrokontaktkupplung (12) im Hinblick auf die Deckfläche des kegel- oder pyramidenstumpfförmigen Bereiches (22) zentral angeordnet ist.

12. Kupplungskopf (1) nach Anspruch 11,
wobei die Elektrokontaktkupplung (12) relativ zu dem Kupplungskopfgehäuse (3), und insbesondere relativ zu dem vorstehenden Bereich (22) des Kupplungskopfgehäuses (3), in Kupplungsrichtung (L) verschiebbar ist zum Überführen der Elektrokontaktkupplung (12) in ihre Kuppelstellung, in welcher mindestens ein Kontaktstift (18) der Elektrokontaktkupplung (12) durch die Deckfläche des kegel- oder pyramidenstumpfförmigen Bereiches (22) läuft und von der Deckfläche in Kupplungsrichtung (L) hervorsteht.

13. Kupplungskopf (1) nach Anspruch 12,
wobei ferner ein vorzugsweise aus einem elektrisch isolierenden Material, insbesondere Kunststoff, gebildeter Führungskörper (21) vorgesehen ist zum Führen der Bewegung des mindestens einen Kontaktstiftes (18) relativ zu dem Kupplungskopfgehäuse (3) beim Überführen der Elektrokontaktkupplung (12) in ihre Kuppelstellung, wobei der Führungskörper (21) in eine in der Deckfläche des kegel- oder pyramidenstumpfförmigen Bereiches (22) vorgesehene Öffnung gesetzt und mit dem Kupplungskopfgehäuse (3) verbunden ist, und wobei der Führungskörper (21) eine parallel zur Kupplungsrichtung (L) verlaufende Bohrung (23) aufweist, durch welche der mindestens eine Kontaktstift (18) bei seiner Bewegung relativ zu dem Kupplungskopfgehäuse (3) läuft.

14. Kupplungskopf (1) nach Anspruch 12 oder 13,
wobei der mindestens eine Kontaktstift (18) einen stirnseitigen Bereich aus einem elektrisch nicht-leitfähigen Material aufweist.

15. Kupplungskopf (1) nach einem der Ansprüche 12 bis 14,
wobei ein erster Kuppelverschluss (6) und ein zweiter Kuppelverschluss (8) vorgesehen sind, wobei die beiden Kuppelverschlüsse (6, 8) in einer gemeinsamen horizontalen Ebene liegen und von dem zentral angeordneten vorstehenden Bereich (22) jeweils seitlich beabstandet angeordnet sind.

16. Kupplungsvorrichtung (100) zum mechanischen Verbinden von zwei Einheiten, insbesondere Fahrzeugeinheiten, wie etwa zwei benachbarte Wagenkästen eines mehrteiligen Fahrzeugverbundes oder ein Pick-Up-Aufbau und die Ladefläche eines Kraftfahrzeuges, wobei die Kupplungsvorrichtung (100) einen mit einer der beiden Einheiten verbundenen Kupplungskopf (1) nach einem der Ansprüche 1 bis 15 und einen mit der anderen der beiden Einheiten verbundenen Gegenkupplungskopf (31) aufweist, wobei der Gegenkupplungskopf (31) mindestens einen Kuppelverschluss (36, 38) zum Herstellen einer mechanischen Verbindung mit dem mindestens einen Kuppelverschluss (6, 8) des Kupplungskopfes (1) und eine zur Elektrokontaktkupplung (12) des Kupplungskopfes (1) komplementär ausgebildete Elektrokontaktkupplung (42) aufweist.

17. Kupplungsvorrichtung (100) nach Anspruch 16,
wobei die Elektrokontaktkupplung (12) des Kupplungskopfes (1) relativ zu dem Kupplungskopfgehäuse (3) des Kupplungskopfes (1) in Kupplungsrichtung (L) des Kupplungskopfes (1) verschiebbar ist zum Überführen der Elektrokontaktkupplung (12) des Kupplungskopfes (1) in ihre Kuppelstellung, in welcher mindestens ein Kontaktstift (18) der Elektrokontaktkupplung (12) zumindest bereichsweise außerhalb des Kupplungskopfgehäuses (3) freiliegt derart, dass dieser in einer komplementär zum Kontaktstift (18) ausgebildeten Buchse (48) der Elektrokontaktkupplung (42) des Gegenkupplungskopfes (31) aufnehmbar ist, und
wobei in der Buchse (48) der Elektrokotaktkupplung (42) des Gegenkupplungskopfes (31) ein relativ zu der Buchse (48) in Kupplungsrichtung (L) verschiebbar gelagertes Isolierelement (51) vorgesehen ist, welches beim Aufnehmen des Kontaktstiftes (18) der Elektrokontaktkupplung (12) des Kupplungskopfes (1) in der Buchse (48) der Elektrokontaktkupplung (42) des Gegenkupplungskopfes (31) entgegen der Kupplungsrichtung des Gegenkupplungskopfes verschoben wird, und wobei der mindestens eine Kontaktstift (18) der Elektrokontaktkupplung (12) vorzugsweise einen stirnseitigen Bereich aus einem elektrisch nichtleitfähigen Material aufweist.

## Claims

1. A coupler head (1) of a coupling device (100) for mechanically connecting two units, in particular vehicle units such as two adjacent car bodies of a multi-member vehicle train, or a pick-up assembly and the cargo area of a motor vehicle, comprising at least one coupler lock (6, 8) to form a mechanical connection with a coupler lock (36, 38) of a counter-coupler head (31) as well as with an electrical contact coupling (12) for the coupling of at least one electrical line between the coupler head (1) and the counter-coupler head (31), wherein the coupler head (1) further comprises the following:
- a base body (2) to which the at least one coupler lock (6, 8) and/or electrical contact coupling (12) is/are mounted; and
- a coupler head housing (3) which accommodates the base body (2) comprising
the at least one coupler lock (6, 8) and/or electrical contact coupling (12),
wherein the base body (2) comprises a linkage (4) to which a coupling shaft (5) is articulated so as to be pivotable in a horizontal and/or vertical plane, **characterized in that**
a pneumatic/hydraulic line coupling (24, 25) is further provided to automatically couple at least one pneumatic/hydraulic line,
wherein the pneumatic/hydraulic line coupling (24, 25) preferably comprises at least one pneumatic/hydraulic line connection mounted to the base body (2) which is displaceable together with said base body (2) in coupling direction (L) relative to the coupler head housing (3), and
wherein at least one opening (26, 27) is provided in the side of the coupler head housing (3) facing the coupling plane in which the at least one pneumatic/hydraulic line connection is situated and/or through which the at least one pneumatic/hydraulic line connection extends when the coupler head housing (3) is in its displaced state counter to coupling direction (L) relative to the base body (2) respectively.

2. The coupler head (1) according to claim 1,
wherein the base body (2) comprises a vertically extending area (13) on its side opposite from the coupling plane which has a centrally arranged opening (14) through which the coupling shaft (5) extends, wherein the opening (14) defines the pivoting range of the coupler head (1) relative to the coupling shaft (5).

3. The coupler head (1) according to claim 1 or 2,
wherein the linkage (4) is realized as a spherical bearing by means of which the coupling shaft (5) is articulated to the base body (2) so as to be pivotable in a horizontal and vertical plane relative to the coupler head (1), wherein the spherical bearing preferably further allows torsional movement of the coupling shaft (5) relative the coupler head (1); or wherein the linkage (4) is realized as a swivel joint by means of which the coupling shaft (5) is articulated to the base body (2) so as to be pivotable in a horizontal or vertical plane relative to the coupler head (1), and wherein the coupling shaft (5) preferably comprises a first shaft section (15) and a second shaft section (16) connected by means of an articulation (17) so as to be pivotable relative one another in a vertical or horizontal plane.

4. The coupler head (1) according to any one of claims 1 to 3,
wherein the electrical contact coupling (12) is displaceable in the coupling direction (L) of the coupler head (1) relative to the coupler head housing (3) so as to convey the electrical contact coupling (12) into its coupling position in which at least one contact pin (18) of the electrical contact coupling (12) is at least partly exposed outside of the coupler head housing (3) such that it can be received in a sleeve (48) of an electrical contact coupling (12) of a counter-coupler head (31) configured complementary to said contact pin (18).

5. The coupler head (1) according to claim 4,
wherein the coupler head housing (3) is displaceable counter to coupling direction (L) relative to base body (2) such that the electrical contact coupling (12) mounted to the base body (2) is automatically conveyed into its coupling position when a predefined or definable minimum force acts on the coupler head housing (3) counter to the coupling direction (L); and wherein a spring mechanism is preferably provided to preload the coupler head housing (3) in the coupling direction (L) relative to the base body (2), wherein the preload force is preferably definable by appropriately selecting the spring characteristic to the spring mechanism.

6. The coupler head (1) according to claim 5,
wherein the at least one coupler lock (6, 8) comprises a coupling eye (7, 9) which is designed to form a releasable mechanical connection with a coupler lock (36, 38) of a counter-coupler head (31), and in particular with a core piece (40, 41) of a coupler lock (36, 38) of a counter-coupler head (31), and
wherein at least one opening (19, 20) is provided in the side of the coupler head housing (3) facing the coupling plane through which the coupling eye (7, 9) of the at least one coupler lock (6, 8) extends when the coupler head housing (3) is in its displaced state counter to coupling direction (L) relative to the base body (2).

7. The coupler head (1) according to claim 4,
wherein the electrical contact coupling (12) is mounted to the base body (2) by means of a displacement mechanism such that the electrical contact coupling (12) is displaceable in coupling direction (L) relative to the coupler head housing (3) and relative to the base body (2) so as to automatically convey the electrical contact coupling (12) into its coupling position after said displacement mechanism has been activated.

8. The coupler head (1) according to any one of claims 4 to 7,
wherein a guide body (21) preferably made from an electrically insulating material, in particular plastic, is further provided to guide the movement of the at least one contact pin (18) relative to the coupler head housing (3) when the electrical contact coupling (12) is conveyed into its coupling position.

9. The coupler head (1) according to any one of claims 1 to 8,
wherein a centering device is further provided to center the coupler head (1), wherein the centering device is preferably a mechanical centering device which makes use of at least one spring to center the coupler head (1).

10. The coupler head (1) according to any one of claims 1 to 9,
wherein an alignment is further provided to align the coupler head (1) relative to a counter-coupler head (31) upon the coupler head (1) nearing the counter-coupler head (31), wherein the coupler head housing (3) hereto preferably comprises at least one area (22) projecting in coupling direction (L) which is configured to engage in a receiver (52) of the counter-coupler head (31) configured complementary to said projecting area (22) upon the coupler head (1) nearing the counter-coupler head (31).

11. The coupler head (1) according to claim 10,
wherein the projecting area (22) is centrally arranged on the side of the coupler head housing (3) facing the coupling plane and has a frustoconical or frustopyramidal geometry, and wherein the electrical contact coupling (12) is centrally arranged with regard to the upper surface of the frustoconical or frustopyramidal area (22).

12. The coupler head (1) according to claim 11,
wherein the electrical contact coupling (12) is displaceable in coupling direction (L) relative to the coupler head housing (3), and in particular relative to the projecting area (22) of the coupler head housing (3), so as to convey the electrical contact coupling (12) into its coupling position in which at least one contact pin (18) of said electrical contact coupling (12) extends through the upper surface of the frustoconical or frustopyramidal area (22) and projects from the upper surface in coupling direction (L).

13. The coupler head (1) according to claim 12,
wherein a guide body (21) preferably made from an electrically insulating material, in particular plastic, is further provided to guide the movement of the at least one contact pin (18) relative to the coupler head housing (3) when the electrical contact coupling (12) is conveyed into its coupling position, wherein the guide body (21) is positioned in an opening provided in the upper surface of the frustoconical or frustopyramidal area (22) and connected to the coupler head housing (3), and wherein the guide body (21) has a drill hole (23) running parallel to the coupling direction (L) through which the at least one contact pin (18) extends upon its movement relative to the coupler head housing (3).

14. The coupler head (1) according to claim 12 or 13,
wherein the least one contact pin (18) comprises a frontal area made from an electrically non-conductive material.

15. The coupler head (1) according to any one of claims 12 to 14,
wherein a first coupler lock (6) and a second coupler lock (8) are provided, wherein the two coupler locks (6, 8) lie in a common horizontal plane and are each arranged at a lateral spacing from the centrally arranged projecting area (22).

16. A coupling device (100) for mechanically connecting two units, in particular vehicle units such as two adjacent car bodies of a multi-member vehicle train, or a pick-up assembly and the cargo area of a motor vehicle, wherein the coupling device (100) comprises a coupler head (1) in accordance with any one of claims 1 to 15 connected to one of the two units as well as a counter-coupler head (31) connected to the other of the two units, wherein the counter-coupler head (31) comprises at least one coupler lock (36, 38) to form a mechanical connection with the at least one coupler lock (6, 8) of the coupler head (1) as well as with an electrical contact coupling (42) configured complementary to the electrical contact coupling (12) of coupler head (1).

17. The coupling device (100) according to claim 16,
wherein the electrical contact coupling (12) of coupler head (1) is displaceable in the coupling direction (L) of the coupler head (1) relative to the coupler head housing (3) of coupler head (1) so as to convey the electrical contact coupling (12) of said coupler head (1) into its coupling position in which at least one contact pin (18) of the electrical contact coupling (12) is at least partly exposed outside of the coupler head housing (3) such that it can be received in a sleeve (48) of the electrical contact coupling (42) of the counter-coupling head (31) configured complementary to said contact pin (18); and
wherein an insulating element (51) mounted in the sleeve (48) of the electrical contact coupling (42) of counter-coupler head (31) so as to be displaceable in coupling direction (L) relative said sleeve (48) is provided which is displaced counter to the coupling direction of said counter-coupler head upon the contact pin (18) of the electrical contact coupling (12) of coupler head (1) being received in the sleeve (48) of the electrical contact coupling (42) of the counter-coupler head (31), and wherein the at least one contact pin (18) of the electrical contact coupling (12) preferably comprises a frontal area made from an electrically non-conductive material.

## Revendications

1. Tête d'attelage (1) d'un dispositif d'attelage (100) pour la liaison mécanique de deux unités, en particulier deux unités de véhicules, comme par exemple deux caisses de wagons voisines d'un ensemble de véhicules en plusieurs parties, ou d'une superstructure dite "pick-up" et la surface de chargement d'un véhicule automobile, comprenant au moins une fermeture d'attelage (6, 8) pour établir une liaison mécanique avec une fermeture d'attelage (36, 38) d'une tête d'attelage antagoniste (31) et comprenant un accouplement à contact électrique (12) pour accoupler au moins une ligne électrique entre la tête d'attelage (1) et la tête d'attelage antagoniste (31), dans lequel la tête d'attelage (1) comprend les éléments suivants :
- un corps de base (2) sur lequel est/sont montés ladite au moins une fermeture d'attelage (6, 8) et l'accouplement à contact électrique (12) ;
- un boîtier de tête d'attelage (3) dans lequel est reçu le corps de base (2) avec ladite au moins une fermeture d'attelage (6, 8) et/ou avec l'accouplement à contact électrique (12),
dans laquelle le corps de base (2) comprend une articulation (4) à laquelle est articulée une tige d'attelage (5) avec possibilité de pivotement dans un plan horizontal et/ou vertical,
**caractérisée en ce qu'**il est en outre prévu un accouplement de conduite pneumatique/hydraulique (24, 25) pour accoupler automatiquement au moins une conduite pneumatique ou hydraulique,
dans laquelle l'accouplement de conduite pneumatique/hydraulique (24, 25) comprend de préférence au moins un raccord de conduite pneumatique/hydraulique rapporté sur le corps de base (2), qui est déplaçable conjointement avec le corps de base (2) par rapport au boîtier de tête d'attelage (3) dans la direction d'accouplement (L), et dans laquelle il est prévu de préférence au moins une ouverture (26, 27) dans le côté du boîtier de tête d'attelage (3) tourné vers le plan d'accouplement, ouverture dans laquelle se trouve ledit au moins un raccord de conduite pneumatique/hydraulique ou à travers laquelle passe ledit au moins un raccord de conduite pneumatique/hydraulique quand le boîtier de tête d'attelage (3) se présente dans son état déplacé par rapport au corps de base (2) en sens contraire à la direction d'accouplement (L).

2. Tête d'attelage (1) selon la revendication 1,
dans laquelle le corps de base (2) comporte, sur son côté détourné du plan d'accouplement, une zone (13) s'étendant verticalement avec une ouverture (14) agencée au centre, à travers laquelle passe la tige d'attelage (5), et l'ouverture (14) détermine la zone de pivotement de la tête d'attelage (1) par rapport à la tige d'attelage (5).

3. Tête d'attelage (1) selon la revendication 1 ou 2,
dans laquelle l'articulation (4) est réalisée sous forme de palier sphérique via lequel la tige d'attelage (5) est articulée avec possibilité de pivotement dans un plan horizontal et vertical par rapport à la tête d'attelage (1) sur le corps de base (2), dans laquelle le palier sphérique permet de préférence en outre un mouvement de torsion de la tige d'attelage (5) par rapport à la tête d'attelage (1) ; ou dans laquelle l'articulation (4) est réalisée comme une articulation rotative via laquelle la tige d'attelage (5) est articulée avec possibilité de pivotement sur le corps de base (2) dans un plan horizontal ou vertical par rapport à la tête d'attelage (1), et dans laquelle la tige d'attelage (5) comprend de préférence une première partie de tige (15) et une seconde partie de tige (16), qui sont reliées avec possibilité de pivotement l'une par rapport à l'autre via une articulation (17) dans un plan vertical ou horizontal.

4. Tête d'attelage (1) selon l'une des revendications 1 à 3,
dans laquelle l'accouplement à contact électrique (12) est déplaçable par rapport au boîtier de tête d'attelage (3) dans la direction d'accouplement (L) de la tête d'attelage (1) pour transférer l'accouplement à contact électrique (12) vers sa position d'accouplement dans laquelle au moins une tige de contact (18) de l'accouplement à contact électrique (12) est exposée au moins localement à l'extérieur du boîtier de tête d'attelage (3) de telle façon que cette tige de contact est susceptible d'être reçue dans une douille (48), réalisée complémentaire à la tige de contact (18), d'un accouplement à contact électrique (42) d'une tête d'attelage antagoniste (31).

5. Tête d'attelage (1) selon la revendication 4,
dans laquelle le boîtier de tête d'attelage (3) est déplaçable par rapport au corps de base (2) en sens contraire la direction d'accouplement (L) pour transférer automatiquement l'accouplement à contact électrique (12) rapporté sur le corps de base (2) vers sa position d'accouplement lorsqu'une force minimum, prédéterminée ou prédéterminable, agit sur le boîtier de tête d'attelage (3) en sens contraire à la direction d'accouplement (L) ; et dans laquelle il est de préférence prévu un système à ressort pour précontraindre le boîtier de tête d'attelage (3) par rapport au corps de base (2) en direction d'accouplement (L), et la force de précontrainte est de préférence prédéterminable par un choix approprié de la caractéristique élastique du système à ressort.

6. Tête d'attelage (1) selon la revendication 5,
dans laquelle ladite au moins une fermeture d'attelage (6, 8) comprend un oeillet d'attelage (7, 9) qui est conçu pour former une liaison mécanique détachable avec une fermeture d'attelage (36, 38) d'une tête d'attelage antagoniste (31), et en particulier avec une pièce centrale (40, 41) d'une fermeture d'attelage (36, 38) d'une tête d'attelage antagoniste (31), et dans laquelle il est prévu au moins une ouverture (19, 20) dans le côté du boîtier de tête d'attelage (3) tourné vers le plan d'accouplement, ouverture à travers laquelle passe l'oeillet d'attelage (7, 9) de ladite au moins une fermeture d'attelage (6, 8) quand le boîtier de tête d'attelage (3) se présente dans sa situation déplacée en sens contraire à la direction d'accouplement (L) par rapport au corps de base (2).

7. Tête d'attelage (1) selon la revendication 4,
dans laquelle l'accouplement à contact électrique (12) est rapporté sur le corps de base (2) via un mécanisme de déplacement de telle façon que l'accouplement à contact électrique (12) est déplaçable par rapport au boîtier de tête d'attelage (3) et par rapport au corps de base (2) dans la direction d'accouplement (L) pour transférer automatiquement l'accouplement à contact électrique (12) vers sa position d'accouplement après activation du mécanisme de déplacement.

8. Tête d'attelage (1) selon l'une des revendications 4 à 7,
dans laquelle il est en outre prévu un corps de guidage (21) réalisé de préférence en un matériau électriquement isolant, en particulier une matière plastique, pour guider le mouvement de ladite au moins une tige de contact (18) par rapport au boîtier de tête d'attelage (3) lors du transfert de l'accouplement à contact électrique (12) vers sa position d'accouplement.

9. Tête d'attelage (1) selon l'une des revendications 1 à 8,
dans laquelle il est en outre prévu un moyen de positionnement central pour centrer la tête d'attelage (1), le moyen de positionnement central étant de préférence un moyen de positionnement central mécanique dans lequel le centrage de la tête d'attelage (1) a lieu au moyen d'au moins un ressort.

10. Tête d'attelage (1) selon l'une des revendications 1 à 9,
dans laquelle il est en outre prévu un dispositif d'ajustement pour orienter la tête d'attelage (1) par rapport à une tête d'attelage antagoniste (31) lors du rapprochement de la tête d'attelage (1) vers la tête d'attelage antagoniste (31), et dans laquelle le boîtier de tête d'attelage (3) comprend à cet effet de préférence au moins une zone (22) qui dépasse en direction d'accouplement (L) et qui est réalisée pour, lors du rapprochement de la tête d'attelage (1) vers la tête d'attelage antagoniste (31), s'engager dans un logement (52), réalisé complémentaire à la zone en dépassement (22), de la tête d'attelage antagoniste (31).

11. Tête d'attelage (1) selon la revendication 10,
dans laquelle la zone en dépassement (22) est agencée de manière centrale sur le côté, tourné vers le plan d'accouplement, du boîtier de tête d'attelage (3) et présente une géométrie en forme de tronc de cône ou en forme de tronc de pyramide, et dans laquelle l'accouplement à contact électrique (12) est agencé de manière centrale par rapport à la surface de couverture de la zone (22) en forme de tronc de cône ou en forme de tronc de pyramide.

12. Tête d'attelage (1) selon la revendication 11,
dans laquelle l'accouplement à contact électrique (12) est déplaçable par rapport au boîtier de tête d'attelage (3), et en particulier par rapport à la zone en dépassement (22) du boîtier de tête d'attelage (3), dans la direction d'accouplement (L) pour transférer de l'accouplement à contact électrique (12) vers sa position d'accouplement dans laquelle au moins une tige de contact (18) de l'accouplement à contact électrique (12) passe à travers la surface de couverture de la zone en forme de tronc de cône ou en forme de tronc de pyramide (22), et dépasse de la surface de couverture dans la direction d'accouplement (L).

13. Tête d'attelage (1) selon la revendication 12,
dans laquelle il est en outre prévu un corps de guidage (21), réalisé de préférence en un matériau électriquement isolant, en particulier en matière plastique, pour guider le mouvement de ladite au moins une tige de contact (18) par rapport au boîtier de tête d'attelage (3) lors du transfert de l'accouplement à contact électrique (12) vers sa position d'accouplement, dans laquelle le corps de guidage (21) est placé dans une ouverture ménagée dans la surface de couverture de la zone en forme de tronc de cône ou en forme de tronc de pyramide (22) et est relié au boîtier de tête d'attelage (3), et dans laquelle le corps de guidage (21) comporte un perçage (23) s'étendant parallèlement à la direction d'accouplement (L), à travers lequel passe ladite au moins une tige de contact (18) dans son mouvement par rapport au boîtier de tête d'attelage (3).

14. Tête d'attelage (1) selon la revendication 12 ou 13,
dans laquelle ladite au moins une tige de contact (18) comprend une zone frontale en un matériau qui n'est pas électriquement conducteur.

15. Tête d'attelage (1) selon l'une des revendications 12 à 14,
dans laquelle il est prévu une première fermeture d'attelage (6) et une seconde fermeture d'attelage (8), telles que les deux fermetures d'attelage (6, 8) sont situées dans un plan horizontal commun et sont agencées chacune latéralement à distance de la zone en dépassement (22) agencée au centre.

16. Dispositif d'attelage (100) pour la liaison mécanique de deux unités, en particulier de deux unités de véhicules, comme par exemple de caisses de wagons voisines d'un ensemble de véhicules en plusieurs parties, ou d'une superstructure dite "pick-up" et la surface de chargement d'un véhicule automobile, ledit dispositif d'attelage (100) comprenant une tête d'attelage (1) selon l'une des revendications 1 à 15, reliée à l'une des deux unités, et une tête d'attelage antagoniste (31), reliée à l'autre des deux unités, dans lequel la tête d'attelage antagoniste (31) comprend au moins une fermeture d'attelage (36, 38) pour établir une liaison mécanique avec ladite au moins une fermeture d'attelage (6, 8) de la tête d'attelage (1), et un accouplement à contact électrique (42) réalisé complémentaire à l'accouplement à contact électrique (12) de la tête d'attelage (1).

17. Dispositif d'attelage (100) selon la revendication 16,
dans lequel l'accouplement à contact électrique (12) de la tête d'attelage (1) est déplaçable par rapport au boîtier de tête d'attelage (3) de la tête d'attelage (1) dans la direction d'accouplement (L) de la tête d'attelage (1) pour transférer l'accouplement à contact électrique (12) de la tête d'attelage (1) vers sa position d'accouplement dans laquelle au moins une tige de contact (18) de l'accouplement à contact électrique (12) est exposée au moins localement à l'extérieur du boîtier de tête d'attelage (3) de telle manière que cette tige peut être reçue dans une douille (48), réalisée complémentaire à la tige de contact (18), de l'accouplement à contact électrique (42) de la tête d'attelage antagoniste (31), et
dans lequel il est prévu, dans la douille (48) de l'accouplement à contact électrique (42) de la tête d'attelage antagoniste (31), un élément isolant (51) monté déplaçable par rapport à la douille (48) dans la direction d'accouplement (L), élément isolant qui, lors de la réception de la tige de contact (18) de l'accouplement à contact électrique (12) de la tête d'attelage (1) dans la douille (48) de l'accouplement à contact électrique (42) de la tête d'attelage antagoniste (31), est déplacé en sens contraire à la direction d'accouplement de la tête d'attelage antagoniste, et dans lequel ladite au moins une tige de contact (18) de l'accouplement à contact électrique (12) comprend de préférence une zone frontale en un matériau non conducteur de l'électricité.
